# EUROPEAN PATENT APPLICATION

(11) **EP 4 723 339 A1**
(43) Date of publication of application: **08.04.2026**
(21) Application number: 24813723.4
(22) Date of filing: 31.01.2024
(51) Int. Cl.: H01M 50/298

(54) **BATTERY PACK AND ELECTRIC APPARATUS**

(30) Priority: 31.05.2023 CN 202310633570
(71) Applicant: BYD Company Limited, Shenzhen, Guangdong 518118 (CN)
(72) Inventor: ZHENG, Jianwu, Shenzhen, Guangdong 518118 (CN); WU, Xiangang, Shenzhen, Guangdong 518118 (CN); WANG, Yalei, Shenzhen, Guangdong 518118 (CN); LAI, Qing, Shenzhen, Guangdong 518118 (CN); ZHENG, Xijia, Shenzhen, Guangdong 518118 (CN)
(74) Representative: Mathys & Squire
(86) International application number: PCT/CN2024/074859
(87) International publication number: WO 2024/244517

(57) **Abstract**

A battery pack (100) and an electric apparatus (1000). The battery pack (100) includes: a tray (10), in which an accommodating space (101) is formed; a separator, by means of which the accommodating space (101) is separated into at least two accommodating cavities and a clearance space is formed; at least two electrical assemblies, which are correspondingly disposed in the accommodating cavities; and an electrical connection assembly (20), which includes a first connecting member (210), a second connecting member (220) and an insulating adhesive member, wherein the first connecting member includes a first connecting end and a second connecting end, a second connecting member includes a third connecting end and a fourth connecting end, the second connecting end and the fourth connecting end are electrically connected and are coated with the insulating adhesive member, and the second connecting end, the fourth connecting end and the insulating adhesive member are accommodated in the clearance space.

## Description

### CROSS-REFERENCE TO RELATED APPLICATIONS

The present disclosure claims priority to Chinese Patent Application No. 202310633570.3 filed on May 31, 2023, which is incorporated herein by reference in its entirety.

### FIELD

The present disclosure relates to the field of batteries, in particular to a battery pack and an electric apparatus.

### BACKGROUND

A battery pack usually includes a plurality of electrical assemblies. In order to ensure the independent and reliable functions of each electrical assembly, the electrical assemblies are usually separated in different areas. In order to realize the electrical connection between the electrical assemblies inside the battery pack, wire bars are usually introduced, and there is inevitably a cross-connection between the wire bars. The wire bars usually interfere with other internal structures of the battery pack and occupies additional internal space, which is not conducive to improving the volume utilization of the battery pack.

### SUMMARY

The present disclosure is intended to at least resolve one of the technical problems in the prior art.

In view of this, the present disclosure provides a battery pack and an electric device adopting the battery pack, and is intended to improve the connection reliability between electrical assemblies and the volume utilization of the battery pack.

The technical solution of the present disclosure is as follows.

The present disclosure provides a battery pack, including:
a tray having an accommodation space formed therein;
a separator located in the accommodation space and separating the accommodation space into at least two accommodation cavities; a clearance space formed on the separator;
at least two electrical assemblies correspondingly disposed in the at least two accommodation cavities; and
an electrical connection assembly, including:
a first connection member including a first connection end and a second connection end, the first connection end being adapted to be electrically connected to a first electrical assembly;
a second connection member including a third connection end and a fourth connection end, the third connection end being adapted to be electrically connected to a second electrical assembly; and
an insulating adhesive member;
the second connection end and the fourth connection end being electrically connected and coated with the insulating adhesive member, and the second connection end, the fourth connection end and the insulating adhesive member being accommodated in the clearance space.

According to the battery pack of the present disclosure, the connection reliability between electrical assemblies and the volume utilization of the battery pack are improved.

The present disclosure also provides an electric apparatus, including an electric device and any one of the aforementioned battery packs, the battery pack is electrically connected to the electric device to supply power to the electric device.

In the battery pack, the connection of the first connection member and the second connection member is coated by the insulating adhesive member, and the second connection end, the fourth connection end and the insulating adhesive member are accommodated in the clearance space, so that the interference between the cross-connection of the first connection member, the second connection member and the insulating adhesive member in the electrical connection assembly and the separator in the tray is avoided, the clearance space of the separator can be essentially filled by the cross-connection of the first connection member, the second connection member and the insulating adhesive member, the overall shape is essentially regular, and the assembly of other components in the battery pack is facilitated. Correspondingly, the electric device adopting the battery pack can also utilize the excellent characteristics of the battery pack.

Additional aspects and advantages of the present disclosure will be set forth in part in the following description, will be obvious from the following description, or will be understood through practice of the present disclosure.

### BRIEF DESCRIPTION OF THE DRAWINGS

FIG. 1 is a schematic diagram of a logical structure of an electric device according to an embodiment of the present disclosure;
FIG. 2 is a schematic structural diagram of a battery pack according to an embodiment of the present disclosure;
FIG. 3 is a partial view of a partial schematic structural diagram of the battery pack shown in FIG. 2;
FIG. 4 is a schematic structural diagram of a tray and a plurality of electrical connection assemblies in the battery pack shown in FIG. 2;
FIG. 5 is a schematic structural diagram of an electrical connection assembly in the battery pack shown in FIG. 2;
FIG. 6 is a partial schematic structural diagram of the electrical connection assembly shown in FIG. 5;
FIG. 7 is an exploded view of the electrical connection assembly shown in FIG. 5;
FIG. 8 is a schematic structural diagram of a battery pack according to an embodiment of the present disclosure;
FIG. 9 is another schematic structural diagram of a battery pack according to an embodiment of the present disclosure;
FIG. 10 is an exploded view of a battery pack according to another embodiment of the present disclosure;
FIG. 11 is an enlarged view of part F in FIG. 10;
FIG. 12 is a schematic structural diagram of a first side plate according to an embodiment of the present disclosure;
FIG. 13 is a schematic structural diagram of the first side plate from another perspective according to an embodiment of the present disclosure;
FIG. 14 is a schematic structural diagram of the first side plate from another perspective according to an embodiment of the present disclosure;
FIG. 15 is a sectional view taken along line B-B in FIG. 14;
FIG. 16 is a schematic structural diagram of a tray in a battery pack according to an embodiment of the present disclosure;
FIG. 17 is an exploded view of a cover plate assembly of a battery pack according to an embodiment of the present disclosure;
FIG. 18 is a schematic diagram of a battery tray of a battery pack according to an embodiment of the present disclosure;
FIG. 19 is a schematic diagram of the battery tray of the battery pack from another perspective according to an embodiment of the present disclosure;
FIG. 20 is an enlarged view of part G in FIG. 17;
FIG. 21 is an enlarged view of part H in FIG. 18;
FIG. 22 is an exploded view of a battery pack according to a preferred embodiment of the present disclosure;
FIG. 23 is a schematic diagram of a cover plate of the battery pack shown in FIG. 22;
FIG. 24 is an exploded view of a battery pack according to an embodiment of the present disclosure;
FIG. 25 is a top view of an upper cover according to an embodiment of the present disclosure;
FIG. 26 is a schematic structural diagram of a cooling plate according to an embodiment of the present disclosure;
FIG. 27 is an enlarged view of part C in FIG. 1.

### DETAILED DESCRIPTION

The embodiments of the present disclosure are described below in detail, examples of the embodiments are shown in the accompanying drawings, and the same or similar reference numerals throughout indicate the same or similar components or components having the same or similar functions. The embodiments described below with reference to the accompanying drawings are exemplary and are intended to explain the present disclosure, and will not be understood as a limitation on the present disclosure.

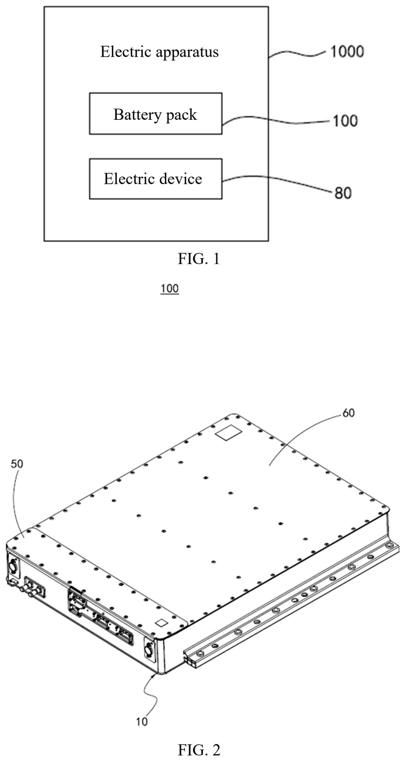

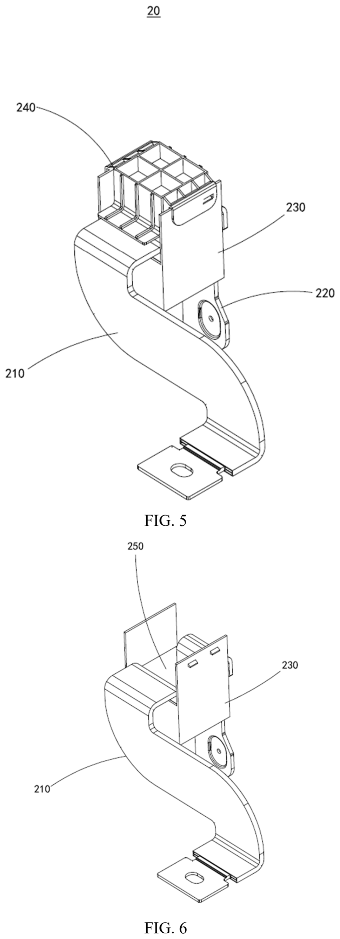

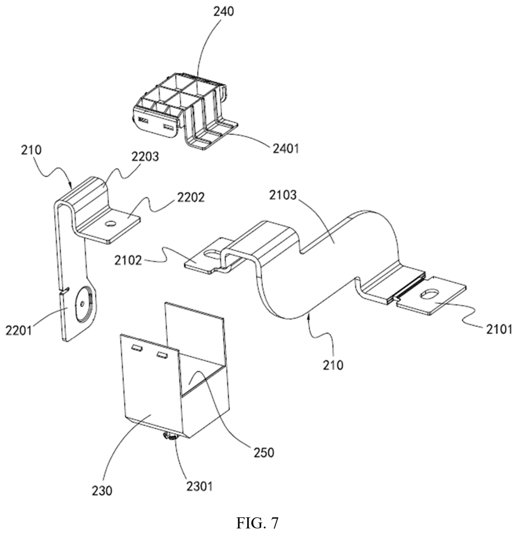

Referring to FIGS. 1 to 7, some exemplary embodiments of an electric apparatus 1000, a battery pack 100, and an electrical connection assembly 20 according to the present disclosure are shown.

Specifically, as shown in FIG. 1, the electric apparatus 1000 includes a battery pack 100 and an electric device 80. The battery pack 100 is electrically connected to the electric device 80 to supply power to the electric device.

In some exemplary embodiments, the electric apparatus 1000 can be a vehicle, for example, a hybrid vehicle or an electric vehicle, and the battery pack 100 is used as a power battery of the vehicle. Correspondingly, the electric device 80 can be a driving motor of the vehicle. It will be understood that the electric apparatus 1000 can also be other apparatuses other than vehicles, for example, a ship, an aircraft, etc., and the specific form can be set according to actual requirements, and only needs to meet the requirement of adopting the battery pack 100 of the present disclosure. The specific structures of the electric apparatus 1000 and the electric device 80 are not the focus of the improvement of the present disclosure, and are not described in detail.

Referring to FIGS. 2 to 7, in some exemplary embodiments, the battery pack 100 can include a tray 10, a separator, at least two electrical assemblies, and an electrical connection assembly 20.

The tray 10 has an accommodation space 101 formed therein for accommodating the at least two electrical assemblies and the electrical connection assembly 20.

The separator is disposed in the tray 10 and separates the accommodation space 101 into at least two accommodation cavities for accommodating the at least two electrical assemblies, and each of the electrical assemblies can be located in a separate accommodation cavity to achieve electrical isolation. The separator can be a separate component, i.e., not included in the structure of the tray 10, or can be one of the components of the tray 10, and can be set according to specific needs. A clearance space is formed on the separator (not labeled in the figures) for the electrical connection assembly 20 to pass through to electrically connect the electrical assemblies in the accommodation cavities on both sides of the separator.

In some embodiments, the electrical connection assembly 20 includes a first connection member 210, a second connection member 220, and an insulating adhesive member (not labeled in the figure). The connection between the first connection member 210 and the second connection member 220 is coated with the insulating adhesive member. The first connection member 210 includes a first connection end and a second connection end. The first connection end is adapted to be electrically connected to a first electrical assembly. The second connection member 220 includes a third connection end and a fourth connection end. The third connection end is adapted to be electrically connected to a second electrical assembly. The second connection end is electrically connected to the fourth connection end. The connection is coated with the insulating adhesive member.

The second connection end, the fourth connection end and the insulating adhesive member are accommodated in the clearance space. In this way, the interference between the cross-connection of the first connection member, the second connection member and the insulating adhesive member in the electrical connection assembly and the separator in the tray is avoided, the clearance space of the separator can be essentially filled by the cross-connection of the first connection member, the second connection member and the insulating adhesive member, the overall shape is essentially regular, and the assembly of other components in the battery pack 100 is facilitated.

In some embodiments, the electrical connection assembly 20 includes a first connection member 210, a second connection member 220, and a first housing 230.

The first connection member 210 includes the first connection end and the second connection end. The first connection end is adapted to be electrically connected to the first electrical assembly. The second connection member 220 includes the third connection end and the fourth connection end. The third connection end is adapted to be electrically connected to the second electrical assembly.

The first housing 230 has a receiving cavity 250 formed therein. The receiving cavity 250 has an open side.

The second connection end and the fourth connection end are adapted to be accommodated in the receiving cavity through the open side, and the second connection end and the fourth connection end are electrically connected. The open side is formed as an injection port for injecting the insulating adhesive into the receiving cavity 250 to coat the second connection end and the fourth connection end after electrical connection. It should be noted that, in practice, the electrical connection assembly 20 can be in a state where the insulating adhesive is not injected.

The first connection end and the third connection end of the electrical connection assembly are respectively connected to two electrical assemblies in adjacent accommodation cavities. The first housing 230 is accommodated in the clearance space.

In the electrical connection assembly 20, the first housing 230 has the receiving cavity 250 formed therein, the receiving cavity 250 has the open side, the second connection end and the fourth connection end are adapted to be accommodated in the receiving cavity 250 through the open side, and the position where the third connection end and the fourth connection end are electrically connected is also located in the receiving cavity 250. The open side is formed as the injection port for injecting the insulating adhesive into the receiving cavity 250 to coat the second connection end and the fourth connection end after electrical connection. In this way, due to the constraint of the first housing 230, the adhesive injection position and the adhesive injection amount are controllable, and after the adhesive injection is completed, the connection and insulation position of the first connection member 210 and the second connection member 220 can form a regular shape, facilitating the shape and position matching with other electrical elements or structural elements. Correspondingly, the battery pack 100 adopting the electrical connection assembly 20 and the electric apparatus 1000 adopting the battery pack 100 can also utilize the excellent characteristics of the electrical connection assembly 20.

In a specific embodiment, the electrical assembly can include a power distribution assembly 30 and a battery assembly 40. Correspondingly, the battery pack 100 provided by the present disclosure can include the tray 10, the electrical connection assembly 20, the power distribution assembly 30 and the battery assembly 40.

The tray 10 has the accommodation space 101 formed therein. The electrical connection assembly 20, the power distribution assembly 30 and the battery assembly 40 can be accommodated in the accommodating space 101. The battery assembly 40 includes a plurality of cells 410 for storing electric energy to realize the power supply of the electric device 80. The power distribution assembly 30 is usually in the form of a power distribution box and is configured for power on, off, and distribution, charging management of the battery assembly 40, and the like.

In a specific embodiment, the battery pack 100 can include one battery assembly 40 or two or more battery assemblies 40. Each battery assembly 40 can include one cell 410, and usually, the battery assembly 40 includes a plurality of cells 410. The plurality of cells 410 can form a corresponding series or parallel relationship according to the voltage output requirement of the battery pack 100, and can be set according to actual requirements, which is not limited herein.

The separator is disposed in the tray 10. The separator separates the accommodation space 101 into at least two accommodation cavities. One of the accommodation cavities is configured to accommodate the power distribution assembly 30, and the other accommodation cavities are configured to accommodate the battery assembly 40. Of course, some of the at least two accommodation cavities can be configured to accommodate other assemblies other than the power distribution assembly 30 and the battery assembly 40 according to specific requirements.

In some embodiments, the at least two accommodation cavities include a power distribution cavity 140 and a battery cavity 150. The power distribution cavity 140 is configured to accommodate the power distribution assembly 30. The battery cavity 150 is configured to accommodate the battery assembly 40. One of the battery cavities 150 is adjacent to the power distribution cavity. The first connection end of the electrical connection assembly is electrically connected to the power distribution assembly 30, and the third connection end of the electrical connection assembly is electrically connected to the battery assembly 40. In specific embodiments, the accommodation space 101 in the tray 10 is generally separated into one power distribution cavity 140 and a plurality of battery cavities 150 by two or more than two separators. The power distribution assembly 30 accommodated in the power distribution cavity 140 is electrically connected to the battery assembly 40 in the adjacent battery cavity 150 by one of the electrical connection assemblies 20. Similarly, the two battery assemblies 40 in the two adjacent battery cavities 150 are electrically connected by another one of the electrical connection assemblies 20. The number of the electrical connection assemblies 20 can be set according to requirements.

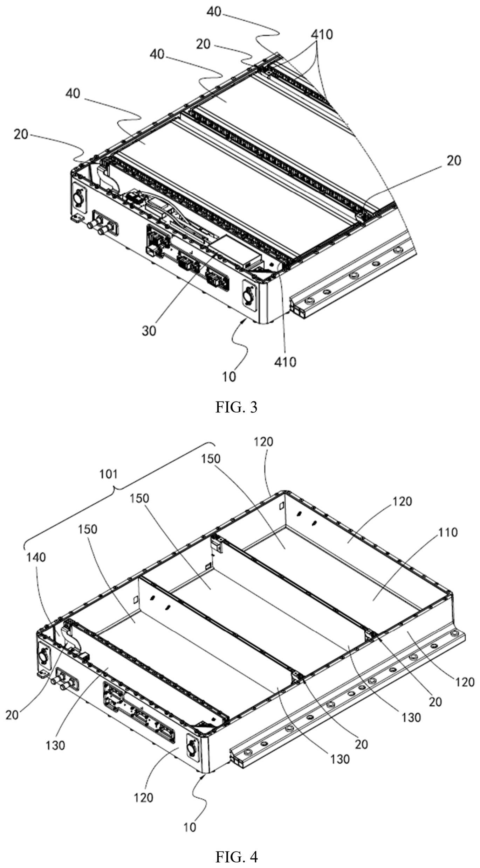

As an example, as shown in FIG. 4, the accommodation space 101 in the tray 10 is separated into one power distribution cavity and three battery cavities by three separators, and the battery pack 100 includes one power distribution assembly and three battery assemblies.

In some embodiments, the tray 10 includes a bottom plate 110, a plurality of side beams 120, and a plurality of cross beams 130. The plurality of side beams 120 are connected to the bottom plate 110 and arranged along the circumference of the bottom plate 110. The plurality of side beams 120 and the bottom plate 110 jointly define the accommodation space 101.

The plurality of cross beams 130 are disposed in the accommodation space 101 and spaced apart. The cross beams 130 serve as the separator to separate the accommodation space 101 into a plurality of accommodation cavities independent of each other.

One side of the cross beam 130 is fixedly connected to the bottom plate 110, and can reinforce the battery pack 100. The clearance space is a notch formed on the other side of the cross beam 130 and passing through the cross beam 130. The inner wall of the notch is formed with a snap portion corresponding to the first housing 230. In specific embodiments, the snap portion can be a separately disposed snap structure or the inner wall of the notch itself, as long as the notch portion can realize the positioning and installation of the first housing 230.

In some embodiments, the first housing 230 has a first snap portion 2301 formed on the outer side thereof, and the first snap portion 2301 is adapted to be snapped and fixed with an external device. Specifically, the inner wall of the notch of the cross beam 130 can form a snap hole, and the first snap portion can be formed as a snap-fit on the outer side of the first housing, and the first housing 230 is positioned and mounted to the notch of the cross beam 130 through the engagement of the snap-fit and the snap hole. Of course, the positions of the snap-fit and the snap hole can be interchanged, and other structures with equivalent effects can also be disposed.

In some embodiments, the electrical connection assembly 20 can further include a second housing 240. The second housing 240 is configured to cooperate with the first housing 230 to close the open side. The second housing 240 can include a second snap portion 2401 adapted to be snapped and fixed with an external device. In specific embodiments, the second housing 240 cooperates with the first housing to close the open side of the first housing 230, so that the portions of the first connection member 210 and the second connection member 220 inside the first housing 230 are coated by the injected insulating adhesive to form a regular shape, and meanwhile, can be configured to fill the notch on the cross beam 130. In specific embodiments, the first housing 230 and the second housing 240 can be made of insulating materials to assist in ensuring the insulating gap.

In some embodiments, the first connection member 210 and the second connection member 220 can be copper bars or aluminum bars, and can be set to a bent shape according to requirements to meet the requirements of electrically connecting different electrical assemblies and adapting to the shape and position relationship. As an example, the first connection member 210 can include a first connection section 2101, a second connection section 2102, and a first extension section 2103 connected between the first connection section 2101 and the second connection section 2102. The free end of the first connection section 2101 forms the first connection end, and the free end of the second connection section 2102 forms the second connection end. In addition, at least one of the first connection section 2101 and the second connection section 2102 forms a bend with the first extension section 2103.

Correspondingly, the second connection member 220 includes a third connection section 2201, a fourth connection section 2202 and a second extension section 2203 connected between the third connection section 2201 and the fourth connection section 2202, the free end of the third connection section 2201 forms the third connection end, and the free end of the fourth connection section 2202 forms the fourth connection end. At least one of the third connection section 2201 and the fourth connection section 2202 forms a bend with the second extension section 2203.

In some embodiments, the electrical connection assembly 20 further includes a fixing member (not shown). The second connection section 2102 and the fourth connection section 2202 are sheet-like structures, and when accommodated in the receiving cavity 250, the second connection section 2102 and the fourth connection section 2202 at least partially overlap and are fixed by the fixing member. For example, the second connection section 2102 and the fourth connection section 2202 are respectively disposed with fixing holes, and the fixing member passes through the fixing holes to fix the second connection section 2102 and the fourth connection section 2202. The fixing member can be a rivet, a screw or the like, and can realize the fixed connection between the second connection section 2102 and the fourth connection section 2202 and also serve as an auxiliary conductive connection.

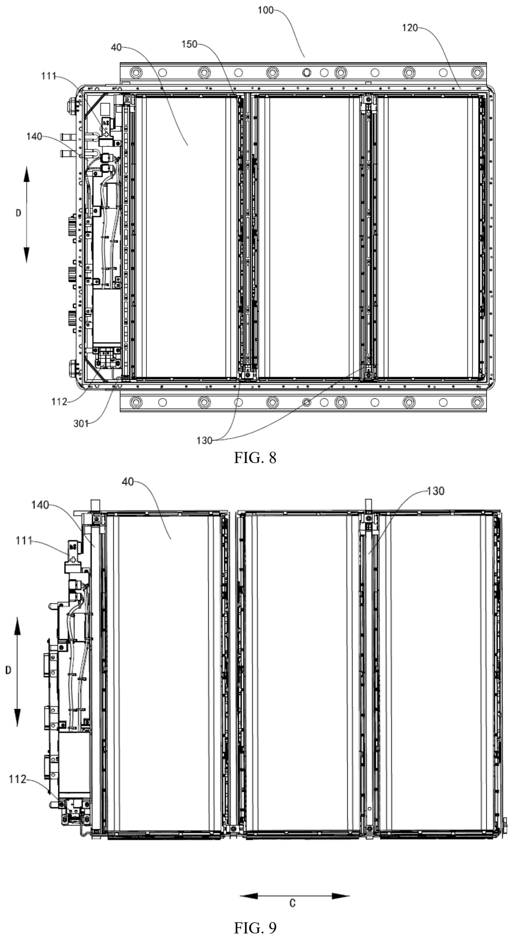

As shown in FIGS. 8 and 9, in an embodiment of the present disclosure, the tray 10 of the battery pack 100 defines a power distribution cavity 140 and a plurality of battery cavities 150. A main positive 111 and a main negative 112 are disposed in the power distribution cavity 140. The plurality of battery assemblies 40 are disposed in the battery cavities 150. In this way, the box body 100 can separate the power distribution cavity 140 from the battery cavities 150. The battery assemblies 40 in the battery cavities 150 do not interfere with the components in the power distribution cavity 140. When the battery pack 100 is maintained or repaired, the maintenance personnel can maintain or repair the battery pack 100 by repairing the harness or components in the power distribution cavity 140, and the maintenance is more convenient. The box body 100 can separate the battery assemblies 40 from the harness or components in the power distribution cavity 140 as much as possible, and the electrical connection safety of the battery pack 100 is further improved.

In addition, the plurality of battery assemblies 40 have a first main connection end 210 connected to one of the main positive 111 and the main negative 112, one end of a conductive bar 301 is connected to the plurality of battery assemblies 40, the other end of the conductive bar 301 forms a second main connection end 310, the second main connection end 310 of the conductive bar 301 extends into the power distribution cavity 140 and is connected to the other of the main positive 111 and the main negative 112. In this way, the second main connection end 310 can also extend to the end of the battery assembly 40 close to the power distribution cavity 140 through the conductive bar 301, that is, the first main connection end 210 and the second main connection end 310 can be located on the same side of the battery assembly 40, so that the first main connection end 210 and the second main connection end 310 are more convenient to be electrically connected to the components in the power distribution cavity 140, the layout of the electrical connection is more reasonable, and the electrical connection of the battery pack 100 is easier during assembly, which is conducive to simplifying the structure of the battery pack 100.

Moreover, in the embodiment of the present disclosure, the second main connection end 310 formed by the conductive bar 301 directly extends into the power distribution cavity 140, that is, the conductive bar 301 does not need to be connected to the adapter and then the adapter is inserted into the power distribution cavity 140, the length of the conductive bar 301 is longer, and the conductive bar 301 as a whole can be insulated during processing, instead of being assembled on the battery assembly 40 and then being insulated, so that the insulation structure of the conductive bar 301 is more complete and reliable and does not fail easily. After the conductive bar 301 is directly inserted into the power distribution cavity 140, the insulation of the conductive bar 301 does not easily fail, the insulation effect of the conductive bar 301 at the transition position of the conductive bar 301 inserted into the power distribution cavity 140 is better, the problem of arcing of the conductive bar 301 can be avoided, and the safety of the electrical connection of the battery pack 100 is improved.

Therefore, the battery pack 100 according to the embodiment of the present disclosure has the advantages of good insulation effect, avoidance of arcing, high safety of electrical connection, and the like.

In some embodiments of the present disclosure, as shown in FIG. 1 to 5, each of the battery assembles 40 includes a plurality of cells connected in series, the plurality of battery assemblies 40 are disposed in a first direction and connected in series with each other, one of the two battery assemblies 40 located on the outermost two sides is disposed with the first main connection end 210, the other of the two battery assemblies 40 located on the outermost two sides is connected to one end of the conductive bar 301, and the first main connection end 210 and the second main connection end 310 are located on the same side of the plurality of battery assemblies 40 in the first direction.

The first direction can be a length direction of the battery pack 10000 (i.e., the direction indicated by arrow C).

In this way, the first main connection end 210 can be extended from one side of the battery assembly 40 on the outermost side, so that the plurality of battery assemblies 40 are electrically connected to the components in the power distribution cavity 140 through the first main connection end 210, and the conductive bar 301 can extend the second main connection end 310 to the same side of the first main connection end 210, the first main connection end 210 and the second main connection end 310 can be extended from the same side of the plurality of battery assemblies 40, so that the first main connection end 210 and the second main connection end 310 are more convenient to be electrically connected to the components in the power distribution cavity 140, the layout of the electrical connection is more reasonable, which is conducive to simplifying the structure of the battery pack 10000.

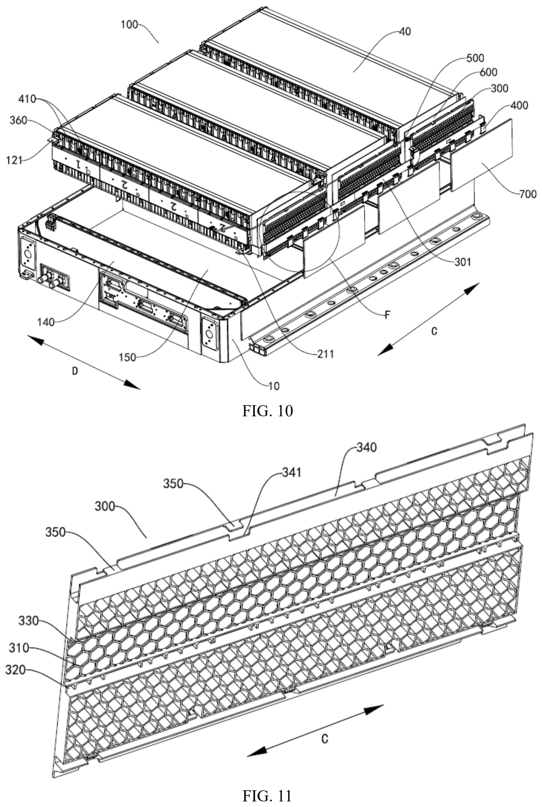

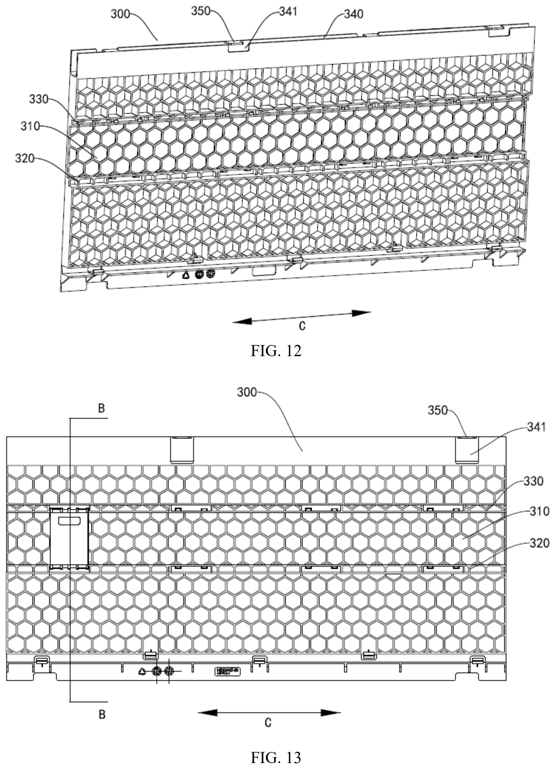

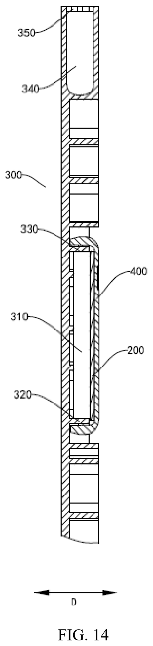

As shown in FIG. 10 to 15, the battery pack 10000 further includes a first side plate 300. The first side plate 300 is disposed on one side of the battery assembly 40, at least a portion of the first side plate 300 is configured as a honeycomb structure, the first side plate 300 is disposed with a positioning groove 310, and the conductive bar 301 is mounted in the positioning groove 310.

In the embodiment of the present disclosure, the first side plate 300 can be formed by injection molding. The first direction can be the length direction of the battery pack 100 (i.e., the direction indicated by arrow C), and the second direction can be the width direction of the battery pack 100 (i.e., the direction indicated by arrow D). The conductive bar 301 can be an aluminum bar.

According to the battery pack 100 of the embodiment of the present disclosure, each of the battery assemblies 40 includes a plurality of cells 410 connected in series, the plurality of battery assemblies 40 are disposed in the first direction and connected in series with each other, one of the two battery assemblies 40 located on the outermost two sides is disposed with a first main lead-out end 121, the first main lead-out end 121 can extend from one side of the battery assembly 40 on the outermost side, so as to facilitate the electrical connection of the plurality of battery assemblies 40 with the power distribution structure or other components through the first main lead-out end 121.

Moreover, the other of the two battery assemblies 40 located on the outermost two sides is connected to one end of the conductive bar 301, the other end of the conductive bar 301 forms the second main lead-out end 211, and the first main lead-out end 121 and the second main lead-out end 211 are located on the same side of the plurality of battery assemblies 40 in the first direction, and it will be understood that, according to the arrangement of the plurality of battery assemblies 40, the first main lead-out end 121 and the second main lead-out end 211 of the battery assembly 40 are generally located on two opposite sides of the battery assembly 40, and in the embodiment of the present disclosure, the second main lead-out end 211 can be extended to the same side of the first main lead-out end 121 by additionally arranging the conductive bar 301, so that the first main lead-out end 121 and the second main lead-out end 211 can extend from the same side of the plurality of battery assemblies 40, the first main lead-out end 121 and the second main lead-out end 211 are more convenient to be electrically connected to the power distribution structure or other components, the layout of the electrical connection is more reasonable, which is conducive to simplifying the structure of the battery pack 100.

In addition, the first side plate 300 is disposed on one side of the battery assembly 40, and at least a portion of the first side plate 300 is configured as a honeycomb structure, and it will be understood that the structural strength of the honeycomb-shaped first side plate 300 can be higher, and the first side plate 300 is less prone to deformation, so that the height of the first side plate 300 can be higher, and the area of the first side plate 300 can be larger. By fixing the first side plate 300 on one side of the plurality of battery assemblies 40, the first side plate 300 can more effectively support and fix one side of the plurality of battery assemblies 40, and more effectively restrict the outward expansion of one side of plurality of battery assemblies 40, the consistency of the plurality of battery assemblies 40 on the side is higher, and the protective effect on the plurality of battery assemblies 40 can be improved, which is conducive to prolonging the service life of the battery pack 100.

In addition, the first side plate 300 is disposed with a positioning groove 310, and the conductive bar 301 is mounted in the positioning groove 310. In this way, the conductive bar 301 can be fixed by the first side plate 300, without the need for additional components for fixing the conductive bar 301. The conductive bar 301 is mounted in the positioning groove 310, not only can the conductive bar 301 be reliably fixed by the positioning groove 310, and the conductive bar 301 can be limited and protected, but also the conductive bar 301 does not additionally occupy the internal space of the battery pack 100, which is conducive to improving the utilization of the internal space of the battery pack 100, thereby avoiding increasing the volume of the battery pack 100, making the volume of the battery pack 100 smaller, and making the installation and fixation more convenient.

In this way, the battery pack 100 according to the embodiment of the present disclosure has the advantages of high space utilization rate, high structural strength, and convenient electrical connection.

In some embodiments of the present disclosure, the plurality of cells 410 in each of the battery assemblies 40 are stacked and disposed in a second direction orthogonal to the first direction. As shown in FIG. 1, the first direction can be the length direction of the battery pack 100 (i.e., the direction indicated by arrow C), and the second direction can be the width direction of the battery pack 100 (i.e., the direction indicated by arrow D).

In this way, the plurality of cells 410 in each of the battery assemblies 40 can be disposed in the width direction of the battery pack 100, and the plurality of battery assemblies 40 can be disposed in the length direction of the battery pack 100, the space in the width direction and the space in the length direction of the battery pack 100 can be fully utilized, the excessive dimensions in the length direction or width direction of battery pack 100 can be avoided, so that the length and width dimensions of the battery pack 100 are more reasonable, the overall structure of the battery pack 100 is more stable, and the battery pack 100 is more convenient to be mounted and fixed and is not easy to be deformed and damaged.

In addition, the conductive bar 301 is located on one side of the plurality of battery assemblies 40 in the second direction and extends in the first direction, that is, the conductive bar 301 extends in the arrangement direction of the plurality of battery assemblies 40, one end of the conductive bar 301 can be connected to one outermost battery assembly 40, and the other end can extend to the outside of the other outermost battery assembly 40, so that the first main lead-out end 121 and the second main lead-out end 211 can be located on the same side of the battery assemblies 40.

Further, as shown in FIG. 1, the first main lead-out end 121 is disposed adjacent to the other side of the plurality of battery assemblies 40 in the second direction.

That is, the conductive bar 301 is located on one side of the battery assembly 40 in the second direction, the second main lead-out end 211 is adjacent to one side of the battery assembly 40 in the second direction, and the first main lead-out end 121 is adjacent to the other side of the battery assembly 40 in the second direction, so that the first main lead-out end 121 and the second main lead-out end 211 can be disposed on the same side of the battery assembly 40 in the first direction and adjacent to the two opposite sides of the battery assembly 40 in the second direction, the first main lead-out end 121 and the second main lead-out end 211 are more convenient to be electrically connected to the power distribution structure or other components, and the first main lead-out end 121 and the second main lead-out end 211 can be spaced apart in the second direction, thereby avoiding positional interference of the first main lead-out end 121 and the second main lead-out end 211, effectively avoiding short circuiting of the battery pack 100, and improving the electrical connection safety.

In some embodiments of the present disclosure, the positioning groove 310 is disposed on the side of the first side plate 300 facing away from the battery assembly 40. That is, the positioning groove 310 is disposed on the outside of the first side plate 300, so that after the first side plate 300 and the plurality of battery assemblies 40 are fixed, the positioning groove 310 is not shielded by the battery assembly 40 or the first side plate 300 itself and the conductive bar 301 is convenient to be mounted into the positioning groove 310. After the conductive bar 301 is mounted into the positioning groove 310, the first side plate 300 itself can separate the plurality of battery assemblies 40 and the conductive bar 301, the direct contact between the battery assembly 40 and the middle portion of the conductive bar 301 is avoided, thereby reducing the probability of short circuit of the battery pack 100.

In some embodiments of the present disclosure, the honeycomb structure is disposed on the side of the first side plate 300 facing away from the battery assembly 40, and/or the honeycomb structure is disposed on the groove bottom of the positioning groove 310.

For example, the honeycomb structure can be disposed on the side of the first side plate 300 facing away from the battery assembly 40, and the honeycomb structure can also be disposed on the groove bottom of the positioning groove 310. In this way, not only the structural strength and supporting capacity of the first side plate 300 can be improved, the fixing effect of the first side plate 300 on the plurality of battery assemblies 40 is better, but also the material of the first side plate 300 can be reduced.

The honeycomb structure is disposed on the side of the first side plate 300 facing away from the battery assembly 40, the side of the first side plate 300 facing the battery assemblies 40 can be a flat surface, and the battery assemblies 40 and the first side plate 300 are more closely fitted, the expansion of the plurality of battery assemblies 40 is more effectively avoided. Furthermore, the honeycomb structure is disposed on the groove bottom of the positioning groove 310, the structural strength of the positioning groove 310 can be improved, thereby making the fixing of the conductive bar 301 by the positioning groove 310 more stable and reliable.

Further, the battery pack 100 further includes a snap plate 400, and the snap plate 400 is snapped on the side of the first side plate 300 facing away from the battery assembly 40 and limits the conductive bar 301 in the positioning groove 310.

A plurality of snap plates 400 can be included, and the plurality of snap plates 400 can be spaced apart in the first direction, so that the snap plate 400 can fix the conductive bar 301 in the positioning groove 310, avoid the conductive bar 301 from being detached from the positioning groove 310, further improve the fixing reliability of the conductive bar 301, and have better limiting and protection effects on the conductive bar 301.

In some embodiments of the present disclosure, the side of the first side plate 300 facing away from the battery assembly 40 is disposed with a first sunken platform 320 and a second sunken platform 330, the first sunken platform 320 and the second sunken platform 330 are respectively located on two sides of the positioning groove 310, and two ends of the snap plate 400 are respectively snapped on the first sunken platform 320 and the second sunken platform 330, so that the snap plate 400 does not exceed the side of the first side plate 300 facing away from the battery assembly 40.

Specifically, the side of the first sunken platform 320 facing away from the battery assembly 40 and the side of the second sunken platform 330 facing away from the battery assembly 40 can exceed the bottom wall of the positioning groove 310, and the side of the first side plate 300 facing away from the battery assembly 40 can exceed the side of the first sunken platform 320 facing away from the battery assembly 40 and the side of the second sunken platform 330 facing away from the battery assembly 40, in addition, the first sunken platform 320 and the second sunken platform 330 can be disposed with the snap hole, and two ends of the snap plate 400 can be bent towards the first side plate 300, so that one end of the snap plate 400 can be inserted into the snap hole of the first sunken platform 320 and the other end can be inserted into the snap hole of the second sunken platform 330, thereby stopping the conductive bar 301 in the positioning groove 310.

Moreover, by arranging the first sunken platform 320 and the second sunken platform 330, the snap plate 400 and the first side plate 300 can be snapped and fixed conveniently, and the first sunken platform 320 and the second sunken platform 330 are recessed relative to the outermost surface of the first side plate 300 towards the direction of the battery assembly 40, so that the snap plate 400 does not exceed the side of the first side plate 300 facing away from the battery assembly 40 after the snap plate 400 is fixed, the space utilization rate inside the battery pack 100 is further improved, the snap plate 400 and the conductive bar 301 do not increase the volume of the battery pack 100, and the layout is more reasonable.

In some embodiments of the present disclosure, the first side plate 300 is disposed with a wiring groove 340, and a sampling line 500 is disposed in the wiring groove 340.

For example, the sampling line 500 can be configured for current data sampling, voltage data sampling or temperature data sampling of the battery pack 100, and the current, voltage or temperature of the battery pack 100 can be fed back to the controller in real time, so that data anomalies of the battery pack 100 can be quickly obtained, faults can be timely resolved, and the safety is higher.

Moreover, by arranging the wiring groove 340, the sampling line 500 does not occupy the internal space of the battery pack 100 additionally, the space utilization of the battery pack 100 is further improved, and the wiring groove 340 can fix the sampling line 500, so that the sampling line 500 is prevented from moving up and down, and the electrical connection of the sampling line 500 is more stable.

In some embodiments of the present disclosure, the wiring groove 340 is disposed on a side edge of the first side plate 300 and extends in the length direction of the first side plate 300.

That is, the width direction of the wiring groove 340 can extend in the thickness direction of the first side plate 300, and the length direction of the wiring groove 340 can extend in the length direction of the first side plate 300. In this way, the wiring groove 340 does not increase the size of the thickness direction of the first side plate 300 additionally, the wiring groove 340 is disposed on the edge of the first side plate 300, the wiring groove 340 is not easily shielded, the sampling line 500 can be fixed in the wiring groove 340 conveniently, and the wiring assembly is more convenient.

Further, the wiring groove 340 is disposed on the upper side edge of the first side plate 300. That is, the wiring groove 340 is upwardly open, and after the sampling line 500 is mounted into the wiring groove 340, the sampling line 500 can fall to the groove bottom of the wiring groove 340 due to gravity, and the groove bottom of the wiring groove 340 can support the sampling line 500, thereby avoiding the sampling line 500 from being detached from the wiring groove 340 under the action of gravity, and facilitating improving the fixing effect on the sampling line 500.

In some embodiments of the present disclosure, the two opposite side walls of the wiring groove 340 are disposed with limiting snap-fits 350 to restrict the wire harness from being detached from the wiring groove 340.

Specifically, the limiting snap-fit 350 is disposed adjacent to the opening of the wiring groove 340, and when the sampling line 500 is mounted, the sampling line 500 can be mounted into the wiring groove 340 by moving the limiting snap-fit 350 to cause the elastic deformation of the limiting snap-fit 350, or the sampling line 500 can be inserted into one end of the wiring groove 340 and extended from the other end of the wiring groove 340. By arranging the limiting snap-fit 350, after the sampling line 500 is mounted into the wiring groove 340, the sampling line 500 can be stopped by the limiting snap-fit 350, thereby further avoiding the sampling line 500 from being detached from the wiring groove 340, and more effectively avoiding the sampling line 500 from moving up and down.

The limiting snap-fit 350 of each side wall of the wiring groove 340 extends to the other side wall, and the limiting snap-fits 350 of the two opposite side walls of the wiring groove 340 are alternately disposed in the length direction of the first side plate 300. That is, the two opposite side walls of the wiring groove 340 are both disposed with the limiting snap-fits 350, and the limiting snap-fits 350 of the two side walls are alternately disposed, so that even if the distance between the limiting snap-fit 350 of one side wall and the other side wall of the wiring groove 340 is large, the limiting snap-fit 350 of the other side wall can stop the sampling line 500, thereby avoiding the sampling line 500 from being detached from the wiring groove 340 from the gap between the limiting snap-fit 350 and the other side wall, and further improving the limiting effect on the sampling line 500.

In some embodiments of the present disclosure, the two opposite side walls of the wiring groove 340 are disposed with notches 341, and the notch 341 of each side wall of the wiring groove 340 is configured to avoid the limiting snap-fit 350 of the other side wall. Specifically, the notch 341 can pass through the wiring groove 340 along the side wall of the wiring groove 340, and the limiting snap-fit 350 can extend into the notch 341, thereby avoiding position interference between the limiting snap-fit 350 and the side wall of the wiring groove 340, and avoiding damage to the limiting snap-fit 350 or the side wall of the wiring groove 340.

In some embodiments of the present disclosure, the battery pack 100 further includes a second side plate 360, and the first side plate 300 and the second side plate 360 are respectively disposed on the two opposite sides of the battery assembly 40. In this way, the second side plate 360 and the first side plate 300 can support the two opposite sides of the battery assembly 40, thereby avoiding expansion of the two opposite sides of the battery assembly 40, and more effectively ensuring the consistency of the plurality of battery assemblies 40.

Specifically, the second side plate 360 can be constructed in the same way as the first side plate 300, that is, the second side plate 360 can also be constructed with the positioning groove 310 and the wiring groove 340, so that the second side plate 360 can support the other side of the battery assembly 40, and the layout of the battery pack 100 can be exchanged according to requirements. For example, the directions of the plurality of battery assemblies 40 can be exchanged, the conductive bar 301 can be fixed into the positioning groove 310 of the second side plate 360, the sampling line 500 can be fixed into the wiring groove 340 of the second side plate 360, and the layout flexibility is higher, or the conductive bar 301 can be fixed into the positioning groove 310 of the first side plate 300, and the sampling line 500 can be fixed into the wiring groove 340 of the second side plate 360, so that the sampling line 500 and the conductive bar 301 can be better spaced apart, position interference between the sampling line 500 and the conductive bar 301 is avoided, and the electrical connection safety is higher.

In some embodiments of the present disclosure, a plurality of first side plate 300 are included, and the plurality of first side plates 300 are disposed in one-to-one correspondence with the plurality of battery assemblies 40, each of the first side plates 300 is disposed with the positioning groove 310, and the conductive bar 301 is mounted in the positioning grooves 310 of the plurality of first side plates 300.

In this way, the first side plate 300 is separately disposed to facilitate the connection and fixation of the first side plate 300 and the battery assembly 40, and the plurality of first side plates 300 and the plurality of battery assemblies 40 can be assembled together one to one before the battery pack 100 is assembled, so that the assembly steps of the battery pack 100 are simplified, and the assembly is more convenient and faster.

In some embodiments of the present disclosure, the first side plate 300 is an insulating injection molded member, wherein the first side plate 300 can be made of plastic material. In this way, the processing steps of the first side plate 300 can be simplified, the plasticity of the first side plate 300 in the embodiments of the present disclosure is stronger than that of the extrusion-molded metal side plate in the prior art, and different structures can be designed and correspond to different functions, so as to facilitate the first side plate 300 being constructed with the honeycomb structure, and facilitate the positioning groove 310 and the wiring groove 340 being constructed on the first side plate 300. The space utilization of the first side plate 300 is improved, the space utilization of the battery pack 100 can be improved, the first side plate 300 can insulate and protect the cell 410 and the conductive bar 301, and the safety of the battery pack 100 is improved.

In some embodiments of the present disclosure, the battery pack 100 further includes aerogel 600 and foam 700.

The aerogel 600 is disposed between the first side plate 300 and the battery assembly 40, and the foam 700 is disposed on the side of the first side plate 300 facing away from the battery assembly 40 and the side of the conductive bar 301 facing away from the first side plate 300. In this way, the aerogel 600 can be configured for sound insulation and heat insulation of the battery assembly 40, the influence of external temperature on the battery pack 100 is avoided, and the foam 700 can cushion the battery assembly 40, so as to effectively prevent the circulating diving of the cell 410 at the outermost side of each battery assembly 40, improve the consistency of the cells 410 in each battery assembly 40, and thus improve the consistency of the plurality of battery assemblies 40.

In some embodiments of the present disclosure, the battery pack 100 further includes the tray 10.

The power distribution cavity 140 and a plurality of battery cavities 150 are disposed in the tray 10, the power distribution cavity 140 and the plurality of battery cavities 150 are disposed in the first direction, the power distribution cavity 140 is located on one side of the plurality of battery cavities 150 in the first direction, the plurality of battery assemblies 40 are respectively disposed in the plurality of battery cavities 150, the main positive and the main negative are disposed in the power distribution cavity 140, the first main lead-out end 121 and the second main lead-out end 211 extend into the power distribution cavity 140, one of the first main lead-out end 121 and the second main lead-out end 211 is connected to the main positive, and the other of the first main lead-out end 121 and the second main lead-out end 211 is connected to the main negative, wherein the first side plate 300 and the conductive bar 301 are disposed in the battery cavity 150.

In this way, the tray 10 can separate the power distribution cavity 140 and the battery cavities 150, the first main lead-out end 121 and the second main lead-out end 211 of the plurality of battery assemblies 40 can extend into the power distribution cavity 140, when the battery pack 100 is maintained or repaired in the later period, the maintenance personnel can maintain or repair the battery pack 100 by repairing the harness in the power distribution cavity 140, and the maintenance is more convenient. The tray 10 can separate the battery assemblies 40 from the harness or components in the power distribution cavity 140 as much as possible, and the electrical connection safety of the battery pack 100 is further improved.

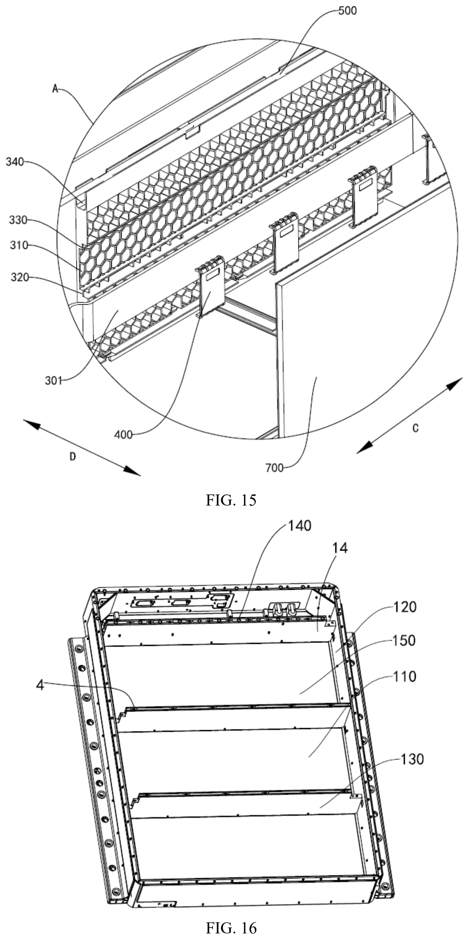

Referring to FIG. 16, the tray 10 and the cross beam 130 are coated with an epoxy resin coating 3. Specifically, the epoxy resin coating 3 is coated on the inner wall of the tray 10 facing the electrical assembly, and on the surface of the cross beam 130 facing the cells 410.

In the tray 10, the epoxy resin coating 3 can be disposed on the inner surface of the tray 10 and the two side surfaces of each cross beam 130 in the thickness direction. Since the epoxy resin has the advantages of strong adhesion, high structural strength, good heat resistance and electrical insulation, the arrangement of the epoxy resin coating 3 increases the insulation and heat insulation of the surfaces of the tray 10 and the cross beam 130 facing the cell 410, and separates the cell 410 from the tray 10 and the cross beam 130. In addition, the epoxy resin coating 3 can be coated on the inner surface of the tray 10 in a complete coverage manner without any missed spots, so that the corners of the tray 10 can be insulated and protected by the epoxy resin coating 3. Thus, when the high-temperature and high-pressure electrolyte of the cell 410 after thermal runaway splashes on the battery tray 100, the epoxy resin coating 3 can prevent the battery pack 100 from arcing and catching fire, thereby preventing the battery pack 100 from exploding and improving the use safety of the battery pack 100. Meanwhile, the processing method of epoxy resin coating 3 is relatively simple, and the production efficiency can be improved.

In some embodiments, the thickness of the epoxy resin coating 3 is D1, where D1 satisfies: 100 µm ≤ D1 ≤ 200 µm. When D1 < 100 µm, the thickness of the epoxy resin coating 3 is thinner, and the insulation effect of the tray 10 is poor; when D1 > 200 µm, the thickness of the epoxy resin coating 3 is thicker, and the weight and cost of the tray 10 are increased. Thus, by setting the thickness of the epoxy resin coating 3 to 100 µm ≤ D1 ≤ 200 µm, the insulation of the tray 10 is ensured, and the weight of the epoxy resin coating 3 is reasonable, and the cost of the tray 10 is reduced.

When the thickness of the epoxy resin coating 3 reaches 150 ± 50 µm, the adhesion of the epoxy resin coating 3 reaches level 0, and the insulation resistance can reach 500 MΩ, which can meet the voltage insulation requirements in the two states of direct current and alternating current (i.e., the leakage current is less than 10 mA when the direct current state voltage is 3 kV, and the leakage current is less than 10 mA when the alternating current state voltage is 1.5 kV). Meanwhile, the epoxy resin coating 3 meets the high-temperature insulation requirements of electrolyte corrosion resistance, cold and hot impact resistance at ambient temperatures of -40°C to 85°C, and high temperature maintenance at 330 °C for 10 minutes.

According to some embodiments of the present disclosure, the epoxy resin coating 3 is sprayed on the inner wall of the tray 10 facing the cell 410 and on the surface of each cross beam 130 facing the cell 410. That is, the epoxy resin coating 3 is prepared using a spraying process. Thus, the epoxy resin coating 3 can be coated on the inner surface of the tray 10 in a complete coverage manner without any missed spots, the metal exposure on the inner wall of the tray 10 is avoided, the thickness of the epoxy resin coating 3 is uniform, the adhesion is good, the risk of insulation failure is further reduced, and meanwhile the epoxy resin coating 3 can maintain good insulation performance under high and low temperature impact.

The side surface of the bottom plate 110 in the thickness direction can also be sprayed with the epoxy resin coating 3. The side surface of each side beam 120 facing the cell 410 is sprayed with the epoxy resin coating 3. A first fireproof member 14 is disposed on the side of the side beam 120 facing the cell 410, and the epoxy resin coating 3 on the side beam 120 is located between the first fireproof member 14 and the side beam 13. Thus, the insulation effect and the fireproof effect of each side beam 120 can be further improved, and the safety and the insulation of the tray 10 are further improved.

In some optional embodiments, the first fireproof member 14 and the second fireproof member 4 are mica members. The mica members have the advantages of good insulation and high temperature resistance. Using the mica members as the first fireproof member 14 and the second fireproof member 4 can prevent the insulation failure caused by the burning through of the epoxy resin coating 3 after the cell 410 catches fire, and can avoid the phenomenon of arcing caused by metal exposure of the battery tray 100.

Further, the thickness of the mica member is D2, wherein the D2 satisfies: 0.5mm≤D2≤1mm. When D2<0.5mm, the thickness of the mica member is thinner, and the protection effect of the mica member on the epoxy resin coating 3 is poor; when D2>1mm, the thickness of the mica member is thicker, and the weight and the cost of the tray 10 are increased. Thus, by setting the thickness of the mica member to 0.5mm≤D2≤1mm, the protection effect of the mica member on the epoxy resin coating 3 is ensured, the weight of the mica member is reasonable, and the cost of the tray 10 is reduced.

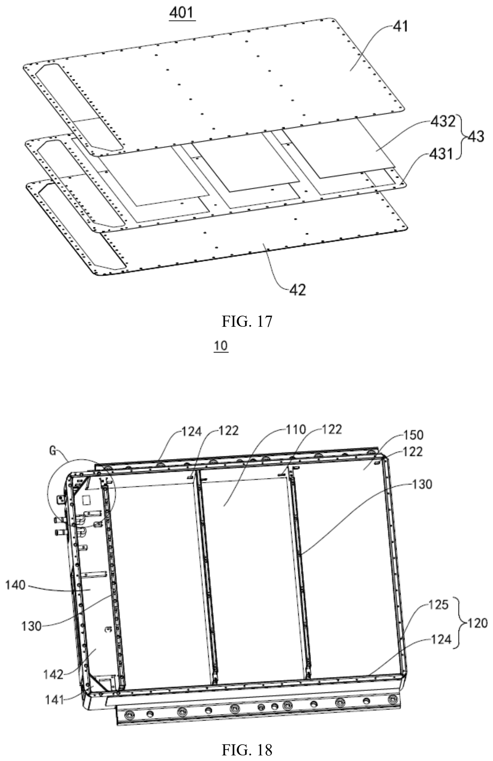

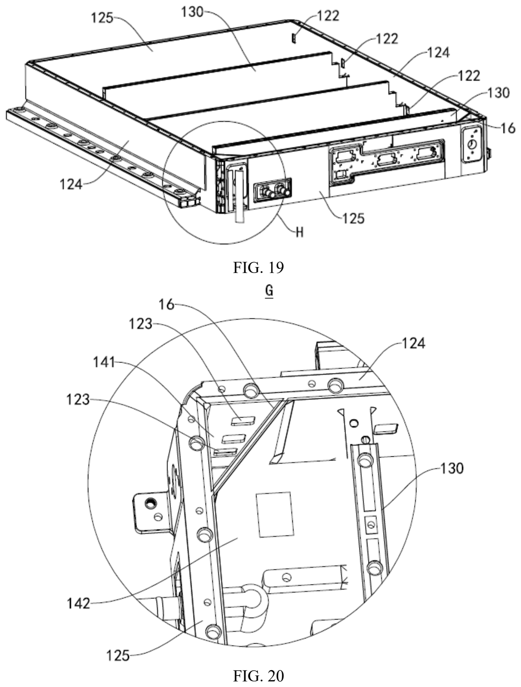

As shown in FIGS. 17 to 21, in some embodiments, the battery pack 100 further includes a cover plate assembly 401 for closing the open side of the tray 10. The cover plate assembly 401 includes a first cover plate 41, a heat absorbing member 43 and a second cover plate 42 from top to bottom in the thickness direction. The first cover plate 41 and the second cover plate 42 can limit movement of the heat absorbing member 43 in the thickness direction of the cover plate assembly 401, thereby ensuring stability of the position of the heat absorbing member 43. When a cell 410 is in thermal runaway, the temperature inside the battery pack 100 rises and a large amount of heat is generated. At this time, the heat inside the battery pack 100 can be transferred to the heat absorbing member 43 through the second cover plate 42, and the heat absorbing member 43 can absorb most of the heat to reduce the temperature inside the battery pack 100. That is, the heat absorbing member 43 can timely remove the heat generated by the thermal runaway of the cell 410, the thermal diffusion of the battery pack 100 is avoided, and the use safety and service life of the battery pack 100 are further improved.

The heat absorbing member 43 includes a body 431 and at least one heat absorbing block 432. The body 431 is formed with at least one mounting hole, and the heat absorbing block 432 is disposed in the mounting hole. In this way, the heat absorbing block 432 can be limited in the mounting hole, thereby ensuring stability of the position of the heat absorbing block 432. The heat absorbing block 432 can be interference-fitted in the mounting hole.

Further, the heat absorbing block 432 is fitted to the second cover plate 42. In this way, the contact area of the heat absorbing block 432 and the second cover plate 42 can be increased, the heat inside the battery pack 100 can be quickly transferred to the heat absorbing block 432 through the second cover plate 42, and the heat conduction efficiency of the cover plate assembly 401 is improved.

In some embodiments, the thickness of the heat absorbing block 432 in the thickness direction of the cover plate assembly 401 is less than or equal to the thickness of the body 431. When the thickness of the heat absorbing block 432 is less than the thickness of the body 431, in order to ensure that the heat absorbing block 432 is fitted to the second cover plate 42, the side surface of the heat absorbing block 432 in the thickness direction can be flush with the side surface of the body 431 in the thickness direction, and the other side surface of the heat absorbing block 432 in the thickness direction is spaced apart from the other side surface of the body 431 in the thickness direction. After the heat absorbing block 432 expands after absorbing heat, the heat absorbing block 432 has a deformation space, and the first cover plate 41 is prevented from bulging. When the thickness of the heat absorbing block 432 is equal to the thickness of the body 431, the first cover plate 41 and the second cover plate 42 are both fitted to the heat absorbing block 432, and the heat conduction efficiency of the cover plate assembly 4 can be improved.

In some specific embodiments, a plurality of heat absorbing blocks 432 are included, and the plurality of heat absorbing blocks 432 are uniformly spaced apart in the length direction of the body 431. For example, in the example of FIG. 2, three heat absorbing blocks 432 are included, and the three heat absorbing blocks 432 are disposed in the length direction of the body 431. Thus, while the structural strength of the cover plate assembly 401 is ensured, the heat absorbing member 43 can absorb the heat generated by thermal runaway of the battery cell 21 as much as possible.

In some optional embodiments, the heat absorbing block 432 is a phase change heat absorbing block that is gasified from a solid to a gas after absorbing heat. In this way, the heat absorbing block 432 has a good heat absorbing performance, can absorb most of the heat in the battery pack 100 when gasified from a solid to a gas, and the heat diffusion of the battery pack 100 due to excessive temperature is avoided.

At least one exhaust channel 121 is disposed inside at least one of the plurality of side beams 120, and the exhaust channel 121 communicates with the accommodation space 101. Specifically, at least one exhaust channel 121 is disposed in the inside of one of the plurality of side beams 120, or at least one exhaust channel 121 is disposed in the inside of each of the plurality of side beams 12, or at least one exhaust channel 121 is disposed in the inside of some of the plurality of side beams 120. The battery pack 100 further includes at least one explosion-proof valve 5, the explosion-proof valve 5 is disposed on a gas passage of the exhaust channel 121 and configured to discharge the gas in the exhaust channel 121 out of the tray 10.

As an example, among the four side beams 120, the two side beams 120 on the two ends of the bottom plate 11 in the width direction are the first side beams 124, and the two side beams 120 on the two ends of the bottom plate 11 in the length direction are the second side beams 125. The insides of the two first side beams 124 are each disposed with the exhaust channel 121, and two explosion-proof valves 5 are disposed on the same second side beam 125 and are respectively located on the two sides of the length direction of the second side beam 125. One end of the exhaust channel 121 communicates with the accommodation cavity, and the other end of the exhaust channel 121 communicates with the explosion-proof valve 5. When the cell 410 has an abnormality such as a short circuit problem, high-temperature gas is easily generated, and the high-temperature gas needs to be discharged from the battery tray 10 in time. At this time, the high-temperature gas in the accommodation cavity can flow to the exhaust channel 121 and be discharged from the battery tray 10 through the explosion-proof valve 5, so as to avoid damaging other cells 410 in a normal state. The gas can be flame, smoke or electrolyte vapor, and can be a mixture of flame, smoke and electrolyte vapor.

The plurality of first cross beams 130 separate the accommodation space 101 into a plurality of cavities independent of each other, and the plurality of cavities include a first cavity 140 and a plurality of second cavities 150. The plurality of battery assemblies 40 are included, the plurality of second cavities 150 are in one-to-one correspondence with the plurality of battery assemblies 40, one end of the exhaust channel 121 communicates with the first cavity 140, the other end of the exhaust channel 121 communicates with the second cavity 150, and the explosion-proof valve 5 is disposed at a position opposite to the first cavity 140 on the side beam 12. As an example, three first cross beams 130 and three battery assemblies 40 are included, the three first cross beams 130 are disposed in the length direction of the bottom plate 110, and the accommodation cavity is separated into one first cavity 140 and three second cavities 150. The three battery assemblies 40 are respectively mounted in the three second cavities 150 to space apart the three battery assemblies 40. The three second cavities 150 can be independently sealed by the cover plate assembly 401, so as to avoid the diffusion of thermal runaway of one battery assembly 40 to the remaining battery assemblies 40. The three second cavities 15 all communicate with the exhaust channel 121, so that the high-temperature gas generated by the thermal runaway of any battery assembly 40 can be transferred to the first cavity 140 through the exhaust channel 121, and then discharged from the battery tray 10 through the explosion-proof valve 5, and the overall thermal runaway of the battery pack 100 is avoided.

A plurality of exhaust channels 121 are included, the plurality of exhaust channels 121 are independent of each other, and the plurality of exhaust channels 121 are in one-to-one correspondence with the plurality of second cavities 150. Each exhaust channel 121 communicates with the first cavity 140 and the corresponding second cavity 150, respectively. Specifically, three exhaust channels 121 are on each first side beam 124, the three exhaust channels 121 are spaced apart in the width direction of the first side beam 124, and the three exhaust channels 121 communicate with three second cavities 150, respectively. In this way, when the battery assembly 40 is in thermal runaway, electrolyte vapor generated by the battery assembly 40 can flow to the first cavity 140 through the corresponding exhaust channels 121, and then the electrolyte vapor can be discharged through the opening of the explosion-proof valve 5, the electrolyte vapor is prevented from flowing randomly in the accommodation cavity, thereby preventing the electrolyte vapor from accumulating and electrical problems such as arcing and fire, and improving the safety performance of the battery pack 100.

In some embodiments, the battery tray 10 further includes at least one second cross beam 16, the second cross beam 16 is disposed in the first cavity 140, and the second cross beam 16 separates the first cavity 140 into a first sub-cavity 141 and a second sub-cavity 142 independent of each other. A power distribution box 6 is disposed in the first sub-cavity 141, the power distribution box 6 is electrically connected to the plurality of cell modules 2, and the plurality of exhaust channels 121 all communicate with the second sub-cavity 142. Two second cross beams 16 can be included, and the two second cross beams 16 are respectively located on two ends of the first cavity 140 in the length direction. The two ends of each second cross beam 16 are respectively connected to the adjacent first side beam 124 and the second side beam 125. The adjacent first side beam 124 and the second side beam 125, the bottom plate 110 and the second cross beam 16 jointly define the second sub-cavity 142, and the second sub-cavity 142 is configured to store the gas flowing out of the exhaust channels 121. Thus, the compact structure of the battery pack 100 is ensured, the gas in the second sub-cavity 142 can be prevented from flowing out to the first sub-cavity 141, the gas can be prevented from entering the power distribution box 6 and causing arcing due to burning and melting of the power distribution box 6, the safety performance of the battery pack 100 is further ensured, and the service life of the power distribution box 6 is ensured.

Each exhaust channel 121 extends from the gas inlet 122 to an end of the side beam 120, the end of the side beam 120 is disposed with a blocking block 17, and the gas outlet is located between the gas inlet 122 and the end of the side beam 120. The blocking block 17 can be sealed and welded with the side beam 120 by, but not limited to, laser welding or argon arc welding. The blocking block 17 is generally arc-shaped, thereby increasing the welding area of the blocking block 17 and the two adjacent side beams 120, and ensuring the sealing between the two adjacent side beams 120. In this way, the gas in the exhaust channel 121 can smoothly enter the second sub-cavity 142, thereby improving the explosion-proof detection, ensuring that the explosion-proof valve 5 can timely discharge the high-temperature gas in the second sub-cavity 142 out of the battery tray 1, and avoiding the gas from flowing into other side beams 120.

Each exhaust channel 121 can include the gas inlet 122 and the gas outlet 123, and each exhaust channel 121 extends from the gas inlet 122 to the gas outlet 123. In this way, the blocking block 17 can be omitted, and the weight of the battery tray 10 is reduced.

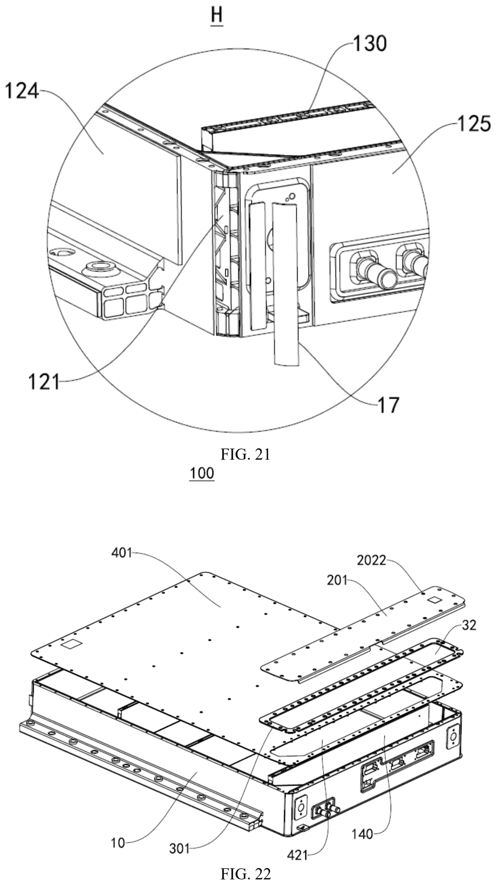

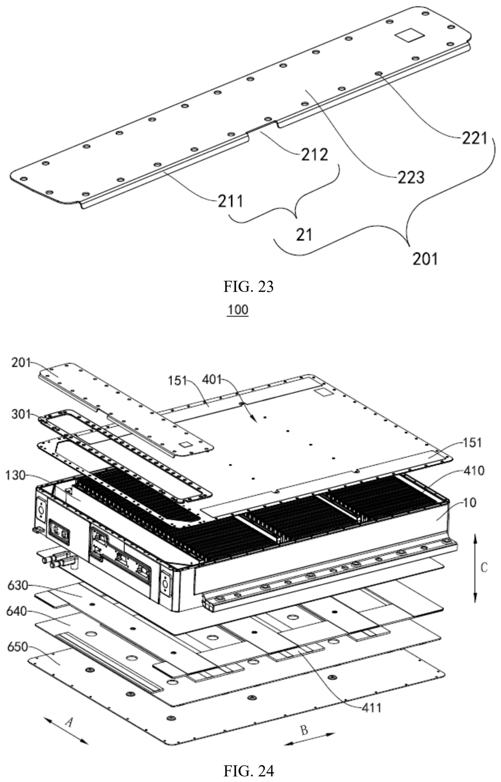

Referring to FIGS. 22 and 23, the top plate 401 of the battery tray 10 is formed with an opening 421, and the battery assembly 40 is disposed in the accommodation cavity 11. A cover plate 201 is detachably disposed on the side of the top plate 401 away from the battery assembly 40, the cover plate 201 covers the opening 121, and the cover plate 201 includes a body 223 and at least one bent portion 221 connected to each other, and the bent portion 221 extends toward the top plate 401. A sealing member 301 is disposed between the top plate 401 and the cover plate 201, and the thickness of the sealing member 301 in the height direction of the battery tray 10 is less than or equal to the height of the bent portion 221.

The opening 421 on the top plate 401 serves as a maintenance opening, and the battery assembly 40 can be maintained through the opening 421. The body 223 of the cover plate 201 covers the opening 421, and the cross-sectional area of the body 223 is greater than the area of the opening 421, so that the body 223 can completely cover the opening 421, and dynamic water flow is prevented from permeating into the accommodation cavity 140 from the opening 421 during use, thereby improving the use safety of the power distribution assembly 30 or the battery assembly 40, and the service life of the battery pack 100.

As shown in FIG. 3, the bent portion 221 can be disposed on the edge of the body 23 and extend downward in the direction towards the top plate 401. The sealing member 301 is located between the top plate 401 and the cover plate 2 in the height direction of the battery tray 10, and the cover plate 2 presses the sealing member 3 against the top plate 401. The sealing member 3 is disposed with a gas vent 32 at the position corresponding to the opening 121, thereby reducing the shielding of the opening 421 and improving the sealing performance of the opening 421 in the circumferential direction, and further improving the sealing performance of the battery pack 100.

The extension length of the bent portion 221 is greater than the thickness of the sealing member 3. That is, the bent portion 221 can completely shield the sealing member 3, the sealing member 301 and the dynamic water flow are spaced apart, so that the dynamic water flow directly impacts the bent portion 221, and the dynamic water flow flows away from the battery tray 10 along the direction of the bent portion 221, thereby preventing the dynamic water flow from entering the accommodation cavity 140 to damage the battery assembly 40, improving the sealing performance and waterproof performance of the battery pack 100, and improving the service life of the battery pack 100.

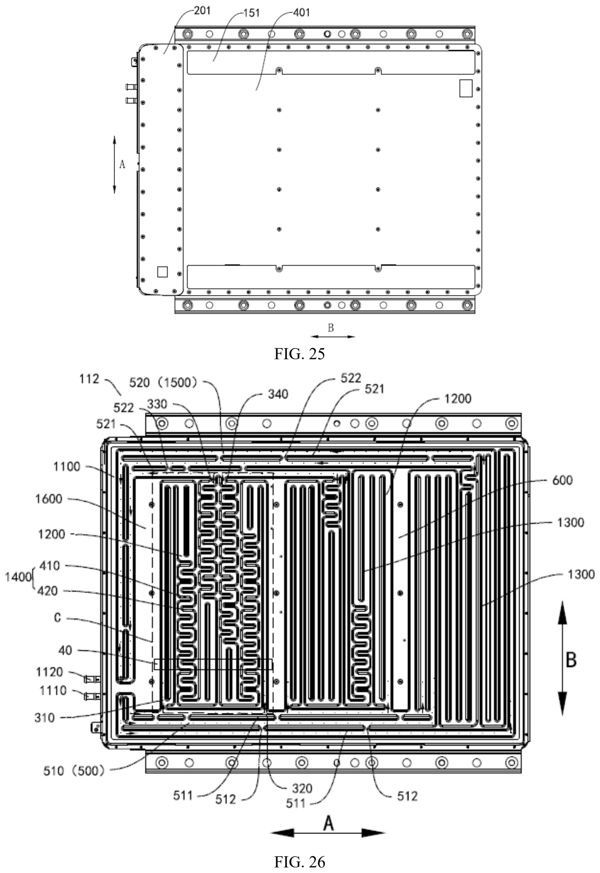

As shown in FIGS. 24 and 25, the battery pack 100 includes the tray 10, a plurality of cells 410, and a reinforcing member 630. The battery pack 100 has the width direction A, the length direction B, and the height direction C. The length direction B and the width direction A of the cell 410 are consistent with the length direction B and the width direction A of the battery pack 100.

Specifically, the reinforcing member 630 is disposed at the bottom of the tray 10, and the reinforcing member 630 includes at least one reinforcing portion. The reinforcing portion is located at the support beam, and the side surface of the reinforcing portion extends below the ends of the plurality of cells 410. The support beam will be understood as the cross beam 130 and/or the side beam 120.

The reinforcing member 630 is disposed at the bottom of the tray 10 in the height direction C of the battery pack 100, and the reinforcing portion extends in the width direction A of the battery pack 100. The reinforcing portion is opposite to the support beam in the height direction C of the battery pack 100. The reinforcing portion is connected to the support beam, and the cell 410 is abutted against the reinforcing portion, thereby forming support for the support beam and the plurality of cells 410 at the bottom of the tray 10.

According to the battery pack 100 of the present disclosure, the reinforcing member 630 is disposed at the bottom of the tray 10, the support beam is opposite to the reinforcing portion, and the structural strength of the tray 10 is effectively improved. The side surface of the reinforcing portion extends below the ends of the plurality of cells 410, and the reinforcing portion is located in the area where the cells 410 bear the maximum stress, thereby effectively improving the stress strength of the two ends of the cells 410 in the length direction B, increasing the protection for the cells 410, and improving the vibration mode of the battery pack 100.

According to some embodiments of the present disclosure, a plurality of support beams are included, the plurality of support beams are spaced apart in the length direction B of the cell 410, and the plurality of support beams are respectively located at two ends of the plurality of cells 410. A plurality of reinforcing portions are included, and the plurality of reinforcing portions are respectively located at the plurality of support beams. The plurality of support beams are spaced apart in the tray 10 in the length direction B of the battery pack 100, and the tray 10 is separated into a plurality of regions for arranging the cells 410. The plurality of reinforcing portions are spaced apart in the length direction B of the battery pack 100 and extend in the width direction A of the battery pack 100, and the plurality of reinforcing portions are opposite to the plurality of support beams.

The battery pack 100 can further include a heat preservation member 640. The heat preservation member 640 is disposed on the side of the reinforcing member 630 away from the tray 10, and at least one heat preservation protrusion is disposed on a side surface of the heat preservation member 640 facing the tray 10, and the heat preservation protrusion is located between two adjacent reinforcing portions. The heat preservation member 640 is disposed below the reinforcing member 630 in the height direction C of the battery pack 100. The plurality of reinforcing portions are spaced apart in the length direction B of the battery pack 100, and the first connection member 32 and the second connection member 33 are located on two sides of the reinforcing member 630 in the width direction A of the battery pack 100. A plurality of rectangular through holes are formed between the plurality of reinforcing portions, the first connection member 32 and the second connection member 33. When the heat preservation member 640 is disposed in the battery pack 100, a plurality of heat preservation protrusions extend in the length direction B of the battery pack 100, and the heat preservation protrusions are matched with the through holes.

Therefore, the heat preservation member 640 is disposed to play a certain heat preservation role on the battery pack 100, and the overall heat preservation performance of the battery pack 100 is improved. Meanwhile, the heat preservation member 640 is disposed on the side of the reinforcing member 630 away from the tray 10. When the battery pack 100 is subjected to a collision from the bottom, the heat preservation cotton can play a certain cushion role, the impact force borne by the reinforcing member 630 is reduced, the protection capability is improved, the overall structural strength of the battery pack 100 is enhanced, and the service life of the battery pack 100 is prolonged.

According to some embodiments of the present disclosure, the top surface of the heat preservation protrusion is flush with the top surface of the reinforcing portion. That is, when the heat preservation member 640 and the reinforcing member 630 are mounted in the height direction C of the battery pack 100, the heat preservation protrusion is matched with the through hole formed on the reinforcing member 630, and the surface of the heat preservation protrusion adjacent to one side of the cell 410 is flush with the surface of the reinforcing portion adjacent to one side of the cell 410, so that the heat preservation protrusion is avoided from protruding from the surface of the reinforcing member 630 adjacent to one side of the cell 410, and interference with the reinforcing member 630 is avoided. A double-sided adhesive tape can be disposed on the side of the heat preservation protrusion close to the tray 10 in the height direction C of the battery pack 100, and the heat preservation protrusion and the tray 10 are bonded together through the double-sided adhesive tape. When the top surface of the heat preservation protrusion is higher than the top surface of the reinforcing portion, the reinforcing member 630 cannot be fixed when the reinforcing member 630 is assembled with the heat preservation member 640, so that the reinforcing member 630 moves along the height direction C of the battery pack 100, the top surface of the reinforcing portion cannot contact the bottom of the tray 10, and a gap exists between the reinforcing portion and the bottom of the tray 10, thereby weakening the protection of the reinforcing member 630 on the tray 10. When the top surface of the heat preservation protrusion is lower than the top surface of the reinforcing portion, the heat preservation protrusion cannot contact the bottom of the tray 10, and a gap exists between the heat preservation member 640 and the tray 10, so that the heat preservation effect of the heat preservation member 640 is poor. Therefore, when the top surface of the heat preservation protrusion is flush with the top surface of the reinforcing portion, the gap among the heat preservation protrusion, the reinforcing portion and the bottom of the tray 10 can be reduced when they are connected, so that the reinforcing member 630 is fixed, and the heat preservation performance and the sealing performance of the battery pack 100 are better.

The battery pack 100 can further include a protective plate 650. The protective plate 650 is disposed at the bottom of the reinforcing member 630. The protective plate 650 is disposed below the heat preservation member 640 in the height direction C of the battery pack 100. The protective plate 650 can be made of a high-strength steel plate sprayed with a nano coating to improve the corrosion resistance of the protective plate 650. Therefore, the arrangement of the protective plate 650 can effectively improve the anti-stone impact capability of the bottom of the battery pack 100 and effectively improve the overall structural strength of the battery pack 100.

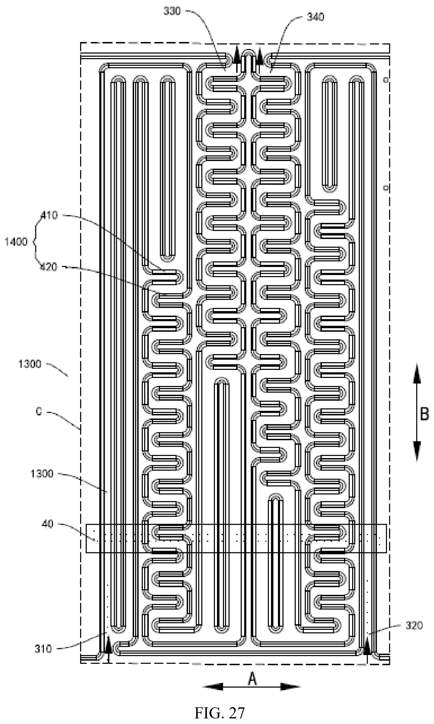

As shown in FIGS. 26 and 27, a cooling plate 111 for the battery pack according to an embodiment of the present disclosure includes a plate body 1100.

The plate body 1100 is configured with a cooling flow channel 1200 and a converging flow channel 1500, the cooling flow channel 1200 forms a plurality of cooling zones 1300 on the plate body 1100, the converging flow channel 1500 forms an inlet flow converging zone 510 and an outlet flow converging zone 520 on the plate body 1100, each of the cooling zones 1300 communicates with the inlet flow converging zone 510 and the outlet flow converging zone 520 respectively, the plurality of cooling zones 1300 are connected in parallel with each other, each of the cooling zones 1300 is configured to cool the same number of battery assemblies 40, at least one of the plurality of cooling zones 1300 is disposed with a throttling structure 1400, the number of the throttling structures 1400 in the plurality of cooling zones 1300 gradually decreases from upstream to downstream of the flow direction of the cooling liquid in the inlet flow converging zone 510, so that the flow rates of the plurality of cooling zones 1300 tend to be the same.

The cooling flow channel 1200 in each cooling zone 1300 is symmetrically disposed as much as possible, so that the stress is uniform during stamping of the cooling plate 111, better flatness is obtained, and manufacturing is facilitated.

For example, the first cooling zone 1300 is configured to cool one battery assembly 40, the second cooling zone 1300 is also configured to cool one battery assembly 40, and each of the other cooling zones 1300 is configured to cool one battery assembly 40; or the first cooling zone 1300 is configured to cool two battery assemblies 40, the second cooling zone 1300 is also configured to cool two battery assemblies 40, and each of the other cooling zones 1300 is configured to cool two battery assemblies 40. By analogy, the first cooling zone 1300 is configured to cool X battery assemblies 40, the second cooling zone 1300 is also configured to cool X battery assemblies 40, and each of the other cooling zones 1300 is configured to cool X battery assemblies 40, wherein X is a positive integer.

According to the cooling plate 111 for the battery pack provided by the embodiment of the present disclosure, each cooling zone 1300 communicates with the inlet flow converging zone 510 and the outlet flow converging zone 520 respectively, and the plurality of cooling zones 1300 are connected in parallel with each other, that is, the cooling liquid does not completely flow through one cooling zone 1300 and then flow through the next cooling zone 1300, but the inlets of the plurality of cooling zones 1300 are connected on the same flow path, and the outlets of the plurality of cooling zones 1300 are connected on another flow path.

In addition, at least one of the plurality of cooling zones 1300 is disposed with the throttling structure 1400 capable of changing the flow resistance of the cooling zone 1300 where the throttling structure 1400 is located. Moreover, the number of throttling structures 1400 in the plurality of cooling zones 1300 gradually decreases from upstream to downstream of the flow direction of the cooling liquid in the inlet flow converging zone 510, so that the flow rates of the plurality of cooling zones 1300 tend to be the same.

That is, in the inlet flow converging zone 510, the number of throttling structures 1400 of the cooling zone 1300 located upstream is more than the number of throttling structures 1400 of the cooling zone 1300 located downstream in the flow direction of the cooling liquid, so it can be seen that the flow resistance in the cooling zone 1300 located upstream is greater than the flow resistance in the cooling zone 1300 located downstream.

Since the flow resistance of the cooling liquid flowing to the cooling zone 1300 located upstream is small in the inlet flow converging zone 510, the sum of the flow resistance before the cooling liquid enters each cooling zone 1300 and the flow resistance in the cooling zone 1300 is set as the total flow resistance of the cooling zone 1300 to the cooling liquid, so the total flow resistances of the plurality of cooling zones 1300 are the same or substantially the same, and the flow rates of the plurality of cooling zones 1300 can be the same or substantially the same, thereby ensuring that the temperatures of the plurality of cooling zones 1300 can be the same or substantially the same, and improving the overall cooling effect of the cooling plate 111 on the battery assembly 40.

In this way, the flow rates of the plurality of cooling zones 1300 of the cooling plate 111 for the battery pack according to the embodiment of the present disclosure tend to be the same, the temperature consistency of the plurality of cooling zones 1300 is higher, and the cooling effect is better.

According to some specific embodiments of the present disclosure, the throttling structure 1400 increases the flow resistance of the cooling zone 1300 where the throttling structure 1400 is located by changing the cross-sectional area and/or the length of the cooling flow channel 1200. That is, the throttling structure 1400 increases the flow resistance of the cooling zone 1300 where the throttling structure 1400 is located by changing at least one of the cross-sectional area and the length of the cooling flow channel 1200. The cooling flow channel 1200 can be disposed in more diverse ways, and the applicability of the cooling plate 111 can be improved.

According to some embodiments of the present disclosure, each throttling structure 1400 includes a first throttling rib 410, the first throttling rib 410 is disposed on one of the two opposite side walls of the cooling flow channel 1200, the first throttling rib 410 extends towards and spaced apart from the other of the two opposite side walls of the cooling flow channel 1200.

By providing the first throttling rib 410, the cooling liquid can only flow through the gap between the first throttling rib 410 and the other of the two opposite side walls of the cooling flow channel 1200, and the cross-sectional area of the cooling flow channel 1200 is changed, so that the flow resistance of the cooling zone 1300 is increased.

According to some embodiments of the present disclosure, each throttling structure 1400 further includes a second throttling rib 420, the second throttling rib 420 is disposed on the other of the two opposite side walls of the cooling flow channel 1200, the second throttling rib 420 extends towards and spaced apart from one of the two opposite side walls of the cooling flow channel 1200.

By providing the second throttling rib 420, the cooling liquid can only flow through the gap between the second throttling rib 420 and the other of the two opposite side walls of the cooling flow channel 1200, and the cross-sectional area of the cooling flow channel 1200 is changed at a plurality of positions of the cooling flow channel 1200 in combination with the first throttling rib 410, so that the flow resistance of the cooling zone 1300 is increased. In addition, the first throttling rib 410 and the second throttling rib 420 are avoided from being disposed one the same side wall of the cooling flow channel 1200, so that the stress on the side walls of the cooling flow channel 1200 is more uniform.

According to some embodiments of the present disclosure, the first throttling rib 410 and the second throttling rib 420 are spaced apart in the length direction of the cooling flow channel 1200. In this way, the first throttling rib 410 and the second throttling rib 420 do not need to be disposed opposite each other, the cross-sectional area of the cooling flow channel 1200 can be controlled at a plurality of positions in the length direction of the cooling flow channel 1200, and the flow resistance in the cooling zone 1300 can be more effectively controlled.

According to some embodiments of the present disclosure, for the cooling zone 1300 disposed with a plurality of throttling structures 1400, the first throttling ribs 410 and the second throttling ribs 420 are disposed alternately in the length direction of the cooling flow channel 1200. In this way, the cooling liquid is subjected to a substantially S-shaped flow route at the throttling structure 1400, the length of the flow route of the cooling liquid can be extended, the cooling liquid can be in full contact with the battery assembly 40 for heat exchange, and the flow resistance in the cooling zone 1300 can also be controlled by changing the length of the flow route of the cooling liquid.

According to some embodiments of the present disclosure, the first throttling rib 410 is perpendicular to one of the two opposite side walls of the cooling flow channel 1200, so that the probability of accumulation of the cooling liquid at the connection between the first throttling rib 410 and the side wall of the cooling flow channel 1200 can be reduced, the processing is convenient, the stress at the connection between the first throttling rib 410 and the side wall of the cooling flow channel 1200 is more uniform, and the service life is improved.

The second throttling rib 420 is perpendicular to the other of the two opposite side walls of the cooling flow channel 1200. The probability of accumulation of the cooling liquid at the connection between the second throttling rib 420 and the side wall of the cooling flow channel 1200 can be reduced, the processing is convenient, the stress at the connection between the first throttling rib 410 and the side wall of the cooling flow channel 1200 is more uniform, and the service life is improved.

According to some embodiments of the present disclosure, the length of the first throttling rib 410 is equal to the length of the second throttling rib 420. In this way, the distance between the first throttling rib 410 and the other of the two opposite side walls of the cooling flow channel 1200 is substantially the same as the distance between the second throttling rib 420 and one of the two opposite side walls of the cooling flow channel 1200, the flow speed of the cooling liquid in the cooling flow channel 1200 does not repeatedly fluctuate, the flow of the cooling liquid is more stable, and the processing difficulty can be reduced and the processing efficiency can be improved because the structures of the first throttling rib 410 and the second throttling rib 420 are substantially the same.

According to some specific embodiments of the present disclosure, the plate body 1100 is configured with a liquid inlet 1110 and a liquid outlet 1120, the inlet flow converging zone 510 communicates with the liquid inlet 1110, the outlet flow converging zone 520 communicates with the liquid outlet 1120, and the number of the throttling structures 1400 in the plurality of cooling zones 1300 decreases with the increase of the distance between the cooling zone 1300 and the liquid inlet 1110.

For example, the cooling zone 1300 farthest from the liquid inlet 1110 can not be disposed with the throttling structure 1400, and the remaining cooling zones 1300 are disposed with the throttling structure 1400; or each cooling zone 1300 is disposed with the throttling structure 1400. Since the closer the cooling zone 1300 is to the liquid inlet 1110, the shorter the length of the inlet flow converging zone 510 between the cooling zone 1300 and the liquid inlet 1110, and thus the smaller the flow resistance between the cooling zone 1300 and the liquid inlet 1110, that is, the flow resistance between the cooling zone 1300 and the liquid inlet 1110 increases with the increase of the distance between the cooling zone 1300 and the liquid inlet 1110, so that by arranging a larger number of throttling structures 1400 in the cooling zone 1300 closer to the liquid inlet 1110, the flow resistance between the cooling zone 1300 and the liquid inlet 1110 can be ensured to be substantially the same as the sum of the flow resistances in the cooling zones 1300, the flow rates of the plurality of cooling zones 1300 can be substantially the same, and the temperature uniformity can be controlled.

According to some specific embodiments of the present disclosure, the plate body 1100 has a first direction and a second direction orthogonal to each other, the first direction is the direction indicated by arrow A, and the second direction is the direction indicated by arrow B, the plurality of cooling zones 1300 are disposed in sequence in the first direction, the inlet flow converging zone 510 and the outlet flow converging zone 520 are respectively located on two sides of the plurality of cooling zones 1300 in the second direction, and the liquid inlet 1110 and the liquid outlet 1120 are located on the same side of the plate body 1100 in the first direction.

In this way, the liquid inlet 1110, the liquid outlet 1120, the converging flow channel 1500 and each cooling zone 1300 are connected to form a U-shaped structure, and the width of the inlet flow converging zone 510 and the width of the outlet flow converging zone 520 can be set to be larger to reduce the overall flow resistance. Since the liquid inlet 1110 and the liquid outlet 1120 are located on the same side of the plate body 1100 in the first direction, the waterway arrangement on the vehicle is facilitated.

According to some embodiments of the present disclosure, each cooling zone 1300 has a first inlet 310, a second inlet 320 and an outlet, for example, a plurality of outlets can be included, and the plurality of outlets include a first outlet 330 and a second outlet 340, the first inlet 310 and the second inlet 320 respectively communicate with the inlet flow converging zone 510, the first outlet 330 and the second outlet 340 respectively communicate with the outlet flow converging zone 520, the first inlet 310 and the second inlet 320 are respectively disposed adjacent to two sides of the cooling zone 1300 in the first direction, and the first outlet 330 and the second outlet 340 are adjacent to each other and located between the first inlet 310 and the second inlet 320 in the first direction. Or one outlet can be included, the outlet communicates with the outlet flow converging zone 520, and the outlet is adjacent to each other and located between the first inlet 310 and the second inlet 320 in the first direction.

The battery assembly 40 has cells stacked and disposed in the second direction, and each cell is disposed with a terminal pole on the two opposite sides in the first direction. Since the first inlet 310 and the second inlet 320 are disposed adjacent to two sides of the cooling zone 1300 in the first direction, the cooling liquid flowing into the cooling zone 1300 from the first inlet 310 and the second inlet 320 can preferentially cool the terminal pole side of the cell, so that the cooling order of the cooling liquid for the cell matches the heating characteristics of the cell, the cooling effect of the cooling liquid can be improved, and the probability of thermal runaway of the cell can be reduced.

According to some embodiments of the present disclosure, the throttling structure 1400 in each cooling zone 1300 is disposed adjacent to at least one of the first inlet 310, the second inlet 320 and the outlet. In this way, the flow resistance of the cooling zone 1300 is changed, the flow resistance inside the cooling zone 1300 is substantially the same, the flow rate of the cooling liquid in the cooling zone 1300 does not fluctuate, and the cooling effect of the battery assembly 40 is good.

According to some embodiments of the present disclosure, each cooling zone 1300 includes a first sub-cooling zone and a second sub-cooling zone, the first sub-cooling zone and the second sub-cooling zone are disposed in the extension direction of the inlet flow converging zone 510, the first sub-cooling zone is closer to the liquid inlet 1110 than the second sub-cooling zone, the first sub-cooling zone has the first inlet 310 and communicates with the outlet, and the second sub-cooling zone has the second inlet 320 and communicates with the outlet. In a plane perpendicular to the thickness direction of the cooling plate 111, the area of the orthographic projection of the first sub-cooling zone is greater than the area of the orthographic projection of the second sub-cooling zone, and the number of throttling structures 1400 in the first sub-cooling zone is less than the number of throttling structures 1400 in the second sub-cooling zone.

Since the first sub-cooling zone is closer to the liquid inlet 1110 than the second sub-cooling zone, the cooling capacity of the cooling liquid in the first sub-cooling zone is greater than the cooling capacity of the cooling liquid in the second sub-cooling zone, and by increasing the area of the first sub-cooling zone and reducing the number of throttling structures in the first sub-cooling zone, the cooling liquid in the first sub-cooling zone can be fully utilized to dissipate heat for the battery assembly 40, and the cooling effect is improved.

According to some embodiments of the present disclosure, the plate body 1100 is configured with an inlet flow disturbing rib 511, the inlet flow disturbing rib 511 is disposed on the bottom wall of the converging flow channel 1500 in the inlet flow converging zone 510, the inlet flow disturbing rib 511 extends in the extension direction of the inlet flow converging zone 510, and the inlet flow disturbing rib 511 is spaced apart from the side wall of the converging flow channel 1500. At least one first notch 512 is disposed on the inlet flow disturbing rib 511 in the extension direction thereof.

When the pressure of the cooling liquid is constant, the greater the area of the flow cross section of the converging flow channel 1500 in the inlet flow converging zone 510, the greater the pressure borne by the wall surface of the converging flow channel 1500 in the inlet flow converging zone 510. Therefore, by arranging the inlet flow disturbing rib 511, the area of the flow cross section of the converging flow channel 1500 in the inlet flow converging zone 510 can be limited, so that the pressure borne by the wall surface of the converging flow channel 1500 in the inlet flow converging zone 510 is within the design standard range, and the pressure resistance of the converging flow channel 1500 in the inlet flow converging zone 510 is ensured. In addition, by providing the first notch 512, the flow paths of the cooling liquid on the two opposite sides of the inlet flow disturbing rib 511 are increased, and the flow efficiency of the cooling liquid is ensured.

According to some embodiments of the present disclosure, a plurality of inlet flow disturbing ribs 511 are included, the plurality of inlet flow disturbing ribs 511 are spaced apart in the width direction of the converging flow channel 1500, and the first notches 512 of adjacent inlet flow disturbing ribs 511 are staggered in the extension direction of the converging flow channel 1500. In this way, by arranging the plurality of inlet flow disturbing ribs 511, the area of the flow cross section of the converging flow channel 1500 in the inlet flow converging zone 510 can be further limited, and because the first notches 512 of adjacent inlet flow disturbing ribs 511 are staggered in the extension direction of the converging flow channel 1500, the flow area at each first notch 512 can meet the design requirements, and the pressure resistance performance is ensured.

According to some embodiments of the present disclosure, the first notch 512 is staggered with the first inlet 310 in the extension direction of the inlet flow converging zone 510, and the first notch 512 is staggered with the second inlet 320 in the extension direction of the inlet flow converging zone 510. In this way, the flow area at each first notch 512 can meet the design requirements, and the pressure resistance performance is ensured.

According to some embodiments of the present disclosure, the plate body 1100 is configured with an outlet flow disturbing rib 521, the outlet flow disturbing rib 521 is disposed on the bottom wall of the converging flow channel 1500 in the outlet flow converging zone 520, the outlet flow disturbing rib 521 extends in the extension direction of the outlet flow converging zone 520, and the outlet flow disturbing rib 521 is spaced apart from the side wall of the converging flow channel 1500. At least one second notch 522 is disposed on the outlet flow disturbing rib 521 in the extension direction thereof.

When the pressure of the cooling liquid is constant, the greater the area of the flow cross section of the converging flow channel 1500 in the outlet flow converging zone 520, the greater the pressure borne by the wall surface of the converging flow channel 1500 in the outlet flow converging zone 520. Therefore, by arranging the outlet flow disturbing rib 521, the area of the flow cross section of the converging flow channel 1500 in the outlet flow converging zone 520 can be limited, so that the pressure borne by the wall surface of the converging flow channel 1500 in the outlet flow converging zone 520 is within the design standard range, and the pressure resistance of the converging flow channel 1500 in the outlet flow converging zone 520 is ensured. In addition, by providing the second notch 522, the flow paths of the cooling liquid on the two opposite sides of the outlet flow disturbing rib 521 are increased, and the flow efficiency of the cooling liquid is ensured.

According to some embodiments of the present disclosure, a plurality of outlet flow disturbing rib 521 are included, the plurality of outlet flow disturbing rib 521 are spaced apart in the width direction of the converging flow channel 1500, and the second notch 522 of adjacent outlet flow disturbing rib 521 are staggered in the extension direction of the converging flow channel 1500. In this way, by arranging the plurality of outlet flow disturbing rib 521, the area of the flow cross section of the converging flow channel 1500 in the outlet flow converging zone 520 can be further limited, and because the second notch 522 of adjacent outlet flow disturbing rib 521 are staggered in the extension direction of the converging flow channel 1500, the flow area at each second notch 522 can meet the design requirements, and the pressure resistance performance is ensured.

According to some embodiments of the present disclosure, the plate body 1100 is further formed with at least one fixing zone 1600, and the at least one fixing zone 1600 and the plurality of cooling zones 1300 are disposed alternately in the extension direction of the inlet flow converging zone 510. The fixing zone 1600 can be configured to fix the relative position between the cooling plate 111 and the tray of the battery pack.

The battery pack according to an embodiment of the present disclosure is described with reference to the accompanying drawings. The battery pack includes the cooling plate 111 for the battery pack according to the above embodiment of the present disclosure.

The battery pack according to the embodiment of the present disclosure has the advantages of a better cooling effect and the like by using the cooling plate 111 for the battery pack according to the embodiment of the present disclosure.

According to some embodiments of the present disclosure, the battery pack further includes a plurality of battery assemblies 40, and the plurality of battery assemblies 40 are disposed in one-to-one correspondence with the plurality of cooling zones 1300. Each cooling zone 1300 cools one corresponding battery assembly 40. In this way, each battery assembly 40 can be cooled by the cooling liquid of the corresponding cooling zone 1300, the area of each cooling zone 1300 can be the same as or similar to the area of the corresponding battery assembly 40, and the area of the cooling zone 1300 can be reduced accordingly, so that the cost can be reduced and the flow efficiency of the cooling liquid can be improved.

According to some embodiments of the present disclosure, the battery pack forms a plurality of accommodation zones, and the plurality of battery assemblies 40 are disposed in one-to-one correspondence in the plurality of accommodation zones. Each accommodation zone has a portion of the converging flow channel 1500 therein, and the portion of the converging flow channel 1500 is configured to cool the battery assembly in the accommodation zone. In this way, the space of the accommodation zone can be fully utilized, the energy density of the battery pack can be increased and the endurance of the battery pack 100 can be improved.

In the description of the present disclosure, it will be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate the orientation or positional relationship on the basis of the orientation or positional relationship shown in the drawings, and are only used to facilitate the description of the application and simplify the description, and are not intended to indicate or imply that the device or element referred to must have a particular orientation, be constructed and operated in a particular orientation, and therefore cannot be understood as limiting the application.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, " a plurality of " means at least two, for example, two or three.

In the present disclosure, it should be noted that unless otherwise explicitly specified and limited, the terms "mount", "connect", "connection", and "fix" will be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art can understand specific meanings of the terms in the present disclosure based on specific situations.

In the present disclosure, unless otherwise clearly specified and limited, the first feature "on" or "under" the second feature can be that the first feature and the second feature are in direct contact, or the first feature and the second feature are in indirect contact through an intermediate medium. Moreover, the first feature "on", "above" and "over" the second feature can be that the first feature is directly above or obliquely above the second feature, or only indicates that the horizontal height of the first feature is higher than that of the second feature. The first feature "under", "below" and "under" the second feature can be that the first feature is directly below or obliquely below the second feature, or only indicates that the horizontal height of the first feature is less than that of the second feature.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. In addition, the person skilled in the art can combine the different embodiments or examples and the features of the different embodiments or examples described in the specification without contradiction.

Although the embodiments of the present disclosure have been shown and described above, it will be understood that, the foregoing embodiments are exemplary and will not be understood as limitation to the present disclosure. A person skilled in the art can make changes, modifications, replacements, or variations to the foregoing embodiments within the scope of the present disclosure.

## Claims

1. A battery pack, comprising:
a tray, an accommodation space being formed in the tray;
a separator, the separator being located in the accommodation space and separating the accommodation space into at least two accommodation cavities; a clearance space being formed on the separator;
at least two electrical assemblies, the at least two electrical assemblies being correspondingly disposed in the at least two accommodation cavities; and
an electrical connection assembly, comprising:
a first connection member, wherein the first connection member comprises a first connection end and a second connection end, the first connection end being adapted to be electrically connected to a first electrical assembly;
a second connection member, wherein the second connection member comprises a third connection end and a fourth connection end, the third connection end being adapted to be electrically connected to a second electrical assembly; and
an insulating adhesive member;
the second connection end and the fourth connection end being electrically connected and coated with the insulating adhesive member, and the second connection end, the fourth connection end and the insulating adhesive member being accommodated in the clearance space.

2. The battery pack according to claim 1, wherein the electrical connection assembly further comprises a first housing, the first housing being made of an insulating material and having a receiving cavity formed therein; the receiving cavity having an open side;
the second connection end and the fourth connection end are adapted to be accommodated in the receiving cavity through the open side and electrically connected; and the open side is formed as an injection port for injecting the insulating adhesive into the receiving cavity to coat the second connection end and the fourth connection end.

3. The battery pack according to claim 2, wherein the electrical connection assembly further comprises a second housing, the second housing is made of an insulating material and configured to cooperate with the first housing to close the open side.

4. The battery pack according to any one of claims 1 to 3, wherein the first connection member comprises a first connection section, a second connection section and a first extension section connected between the first connection section and the second connection section, a free end of the first connection section forms the first connection end, and a free end of the second connection section forms the second connection end;
at least one of the first connection section and the second connection section forms a bend with the first extension section.

5. The battery pack according to any one of claims 1 to 4, wherein the second connection member comprises a third connection section, a fourth connection section, and a second extension section connected between the third connection section and the fourth connection section, a free end of the third connection section forms the third connection end, and a free end of the fourth connection section forms the fourth connection end;
at least one of the third connection section and the fourth connection section forms a bend with the second extension section.

6. The battery pack according to any one of claims 1 to 5, wherein the at least two accommodation cavities comprise:
a power distribution cavity, the power distribution cavity accommodating a power distribution assembly; and
a battery cavity adjacent to the power distribution cavity, the battery cavity accommodating a battery assembly;
the first connection end of the electrical connection assembly being electrically connected to the power distribution assembly, and the third connection end of the electrical connection assembly being electrically connected to the battery assembly.

7. The battery pack according to any one of claims 1 to 5, wherein the at least two accommodation cavities comprise two adjacent battery cavities, and the battery cavities respectively accommodate the battery assembly;
the first connection end and the third connection end of the electrical connection assembly are electrically connected to two battery assemblies in the adjacent battery cavities, respectively.

8. The battery pack according to any one of claims 1 to 7, wherein the tray comprises a bottom plate, a plurality of side beams, and a plurality of cross beams, the plurality of side beams are connected to the bottom plate and arranged along the circumference of the bottom plate, and the plurality of side beams and the bottom plate jointly define the accommodation space;
the plurality of cross beams are disposed in the accommodation space and spaced apart to separate the accommodation space into the plurality of accommodation cavities independent of each other; one side of the cross beam is fixedly connected to the bottom plate, the clearance space is a notch formed on the other opposite side of the cross beam and passing through the cross beam, and the notch is configured as the clearance space.

9. The battery pack according to claim 8, wherein the at least two accommodation cavities comprise the power distribution cavity and a plurality of battery cavities, and a main positive and a main negative are disposed in the power distribution cavity;
the battery comprises a plurality of battery assemblies, the plurality of battery assemblies are disposed in the battery cavities, and the plurality of battery assemblies have a first main connection end, the first main connection end is electrically connected to one of the main positive and the main negative;
a conductive bar, one end of the conductive bar is connected to the plurality of battery assemblies, the other end of the conductive bar forms a second main connection end, the second main connection end of the conductive bar extends into the power distribution cavity and is connected to the other of the main positive and the main negative.

10. The battery pack according to claim 9, wherein each of the battery assemblies comprises a plurality of cells connected in series, the plurality of battery assemblies are disposed in a first direction and connected in series with each other, one of the two battery assemblies located on the outermost two sides is disposed with the first main connection end, the other of the two battery assemblies located on the outermost two sides is connected to one end of the conductive bar, and the first main connection end and the second main connection end are located on the same side of the plurality of battery assemblies in the first direction.

11. The battery pack according to claim 10, wherein the plurality of cells in each of the battery assemblies are stacked and disposed in a second direction orthogonal to the first direction, and the conductive bar is located on one side of the plurality of battery assemblies in the second direction and extends in the first direction.

12. The battery pack according to claim 10, further comprising a first side plate, the first side plate being disposed on one side of the battery assembly, at least a portion of the first side plate being configured as a honeycomb structure, the first side plate being disposed with a positioning groove, and the conductive bar being mounted in the positioning groove.

13. The battery pack according to claim 12, wherein the positioning groove is disposed on a side of the first side plate facing away from the battery assembly.

14. The battery pack according to claim 12, wherein the honeycomb structure is disposed on the side of the first side plate facing away from the battery assembly; and/or the honeycomb structure is disposed on a groove bottom of the positioning groove.

15. The battery pack according to claim 12, further comprising:
a snap plate, the snap plate being snapped on the side of the first side plate facing away from the battery assembly and limiting the conductive bar in the positioning groove.

16. The battery pack according to claim 12, wherein the first side plate is disposed with a wiring groove, and a sampling line is disposed in the wiring groove.

17. The battery pack according to claim 12, further comprising:
a second side plate, the first side plate and the second side plate being respectively disposed on two opposite sides of the battery assembly.

18. The battery pack according to claim 12, wherein a plurality of first side plates are comprised, the plurality of first side plates are disposed in one-to-one correspondence with the plurality of battery assemblies, each of the first side plates is disposed with the positioning groove, and the conductive bar is mounted in the positioning grooves of the plurality of first side plates.

19. The battery pack according to claim 8, wherein the tray further comprises an epoxy resin coating, the epoxy resin coating is disposed on surfaces of the bottom plate, the plurality of side beams and the plurality of cross beams facing the electrical assembly.

20. The battery pack according to claim 19, wherein a thickness of the epoxy resin coating is D1, wherein the D1 satisfies: 100µm≤D1≤200µm.

21. The battery pack according to claim 19, wherein the tray further comprises a first fireproof member and/or a second fireproof member; the first fireproof member is disposed on a side of the side beam facing the electrical assembly, and the epoxy resin coating on the side beam is located between the first fireproof member and the side beam;
the second fireproof member is disposed on two sides of the cross beam in a thickness direction of the cross beam, and the epoxy resin coating on the cross beam is located between the second fireproof member and the cross beam.

22. The battery pack according to claim 21, wherein the first fireproof member and/or the second fireproof member is a mica member, and a thickness of the mica member is D2, wherein the D2 satisfies: 0.5mm≤D2≤1mm.

23. The battery pack according to claim 8, wherein at least one exhaust channel is disposed inside at least one of the plurality of side beams, and the exhaust channel communicates with the accommodation space;
the battery pack further comprises:
at least one explosion-proof valve, the explosion-proof valve being disposed on a gas passage of the exhaust channel and configured to discharge the gas in the exhaust channel out of the tray.

24. The battery pack according to claim 23, wherein the plurality of first cross beams are disposed in the accommodation cavity and spaced apart in a length direction of the bottom plate, and separate the accommodation cavity into a plurality of cavities independent of each other, the plurality of cavities comprising a first cavity and a plurality of second cavities;
a plurality of battery assemblies are comprised, the plurality of second cavities are in one-to-one correspondence with the plurality of battery assemblies, one end of the exhaust channel communicates with the first cavity, the other end of the exhaust channel communicates with the second cavity, and the explosion-proof valve is disposed at a position of the side beam opposite to the first cavity.

25. The battery pack according to claim 24, wherein a plurality of exhaust channels are comprised, the plurality of exhaust channels are independent of each other, the plurality of exhaust channels are in one-to-one correspondence with the plurality of second cavities, and each of the exhaust channels respectively communicates with the first cavity and the corresponding second cavity.

26. The battery pack according to claim 8, further comprising a cover plate assembly disposed on an open side of the tray, the cover plate assembly comprising a first cover plate and a second cover plate, the second cover plate being disposed on a side of the first cover plate adjacent to the tray, and a heat absorbing member being disposed between the first cover plate and the second cover plate.

27. The battery pack according to claim 8, further comprising a cover plate assembly, the cover plate assembly comprising:
a sealing cover mounted on the tray and covering an open side of the tray;
a maintenance plate, the sealing cover being disposed with a maintenance hole, the maintenance plate being detachably mounted on a side of the sealing cover facing away from the tray and covering the maintenance hole; and
a sealing elastic member disposed between the maintenance plate and the sealing cover and surrounding the maintenance hole.

28. The battery pack according to claim 27, wherein the maintenance plate is disposed adjacent to one end of the tray in a length direction of the tray, and an edge of the maintenance plate is disposed with a sealing bent portion extending to an outside of an end face of the one end of the tray.

29. The battery pack according to claim 10, further comprising:
an upper cover, the upper cover being disposed on the top of the tray, the upper cover and the tray jointly defining the accommodation space, and the top of the upper cover being disposed with at least one reinforcing plate;
a reinforcing member, the reinforcing member being disposed at the bottom of the tray, the reinforcing member comprising at least one reinforcing portion, the reinforcing portion being located at the cross beam, the extension direction of the reinforcing portion is the same as the extension direction of the cross beam, the reinforcing portion extending below the ends of the plurality of cells, and the extension direction of the reinforcing portion is perpendicular to the extension direction of the reinforcing plate.

30. The battery pack according to claim 29, wherein the reinforcing member comprises a plurality of the reinforcing portions, the plurality of the reinforcing portions respectively located at the plurality of cross beams.

31. The battery pack according to claim 30, further comprising:
a heat preservation member, the heat preservation member being disposed at a side of the reinforcing member away from the tray.

32. The battery pack according to claim 31, wherein at least one heat preservation protrusion is disposed on a side surface of the heat preservation member facing the tray, and the heat preservation protrusion is located between two adjacent reinforcing portions.

33. The battery pack according to claim 32, wherein a top surface of the heat preservation protrusion is flush with a top surface of the reinforcing portion.

34. The battery pack according to claim 29, wherein the tray further comprises:
a heat exchange plate, the heat exchange plate being disposed at the bottom of the tray frame, and the reinforcing member being disposed at the bottom of the heat exchange plate.

35. The battery pack according to claim 29, further comprising:
a protective plate, the protective plate being disposed at the bottom of the reinforcing member.

36. The battery pack according to claim 8, wherein the bottom plate comprises:
a plate body, the plate body being configured with a cooling flow channel and a converging flow channel for circulating cooling liquid, the cooling flow channel forming a plurality of cooling zones on the plate body, the converging flow channel forming an inlet flow converging zone and an outlet flow converging zone on the plate body, each of the cooling zones communicating with the inlet flow converging zone and the outlet flow converging zone respectively, the plurality of cooling zones being connected in parallel with each other, at least one of the plurality of cooling zones being disposed with a throttling structure, and the number of the throttling structures in the plurality of cooling zones decreasing from upstream to downstream of the flow direction of the cooling liquid in the inlet flow converging zone.

37. The battery pack according to claim 36, wherein each of the cooling zones is configured to cool the same number of battery units.

38. The battery pack according to claim 36, wherein each of the throttling structures comprises:
a first throttling rib, the first throttling rib being disposed on one of the two opposite side walls of the cooling flow channel, the first throttling rib extending towards and spaced apart from the other of the two opposite side walls of the cooling flow channel.

39. The battery pack according to claim 38, wherein each of the throttling structures further comprises:
a second throttling rib, the second throttling rib being disposed on the other of the two opposite side walls of the cooling flow channel, the second throttling rib extending towards and spaced apart from the one of the two opposite side walls of the cooling flow channel.

40. The battery pack according to claim 39, wherein the first throttling rib and the second throttling rib are spaced apart in a length direction of the cooling flow channel where the first throttling rib and the second throttling rib are located.

41. The battery pack according to claim 40, wherein for the cooling zone disposed with a plurality of the throttling structures, the first throttling rib and the second throttling rib are alternately disposed in the length direction of the cooling flow channel where the first throttling rib and the second throttling rib are located.

42. The battery pack according to claim 36, wherein the plate body is further configured with a liquid inlet and a liquid outlet, the liquid inlet communicates with the inlet flow converging zone, and the liquid outlet communicates with the outlet flow converging zone;
the number of the throttling structures in the plurality of cooling zones decreases as a distance between the cooling zone where the throttling structures are located and the liquid inlet increases.

43. The battery pack according to claim 42, wherein the plate body has a first direction and a second direction orthogonal to each other;
the plurality of cooling zones are sequentially disposed in the first direction, the inlet flow converging zone and the outlet flow converging zone are respectively located on two sides of the plurality of cooling zones in the second direction, and the liquid inlet and the liquid outlet are located on a same side of the plate body in the first direction.

44. The battery pack according to claim 43, wherein each of the cooling zones has a first inlet, a second inlet, and an outlet, the first inlet and the second inlet respectively communicate with the inlet flow converging zone, and the outlet communicates with the outlet flow converging zone;
the first inlet and the second inlet are disposed adjacent to two sides of the cooling zone where the first inlet and the second inlet are located in the first direction, respectively, and the outlets are located between the first inlet and the second inlet in the first direction and adjacent to each other.

45. The battery pack according to claim 44, wherein the throttling structure in each of the cooling zones is disposed adjacent to at least one of the first inlet, the second inlet, and the outlet.

46. The battery pack according to claim 44, wherein each of the cooling zones comprises a first sub-cooling zone and a second sub-cooling zone, the first sub-cooling zone and the second sub-cooling zone are disposed in the extension direction of the inlet flow converging zone, the first sub-cooling zone is closer to the liquid inlet than the second sub-cooling zone, the first sub-cooling zone has the first inlet and communicates with the outlet, the second sub-cooling zone has the second inlet and communicates with the outlet;
an area of the orthographic projection of the first sub-cooling zone is greater than an area of the orthographic projection of the second sub-cooling zone in a plane perpendicular to the thickness direction of the cooling plate; and/or
a number of the throttling structures of the first sub-cooling zone is less than a number of the throttling structures of the second sub-cooling zone.

47. The battery pack according to claim 44, wherein the plate body is configured with an inlet flow disturbing rib, the inlet flow disturbing rib is disposed on a bottom wall of the converging flow channel in the inlet flow converging zone, the inlet flow disturbing rib extends in the extension direction of the inlet flow converging zone, the inlet flow disturbing rib is spaced apart from a side wall of the converging flow channel where the inlet flow disturbing rib is located;
wherein at least one first notch is disposed on the inlet flow disturbing rib in the extension direction thereof.

48. The battery pack according to claim 47, wherein a plurality of inlet flow disturbing ribs are comprised, the plurality of inlet flow disturbing ribs are spaced apart in a width direction of the converging flow channel where the inlet flow disturbing ribs are located, the first notches of the adjacent inlet flow disturbing ribs are staggered in the extension direction of the converging flow channel where the inlet flow disturbing ribs are located.

49. The battery pack according to claim 47, wherein the first notch is staggered with the first inlet in the extension direction of the inlet flow converging zone;
the first notch is staggered with the second inlet in the extension direction of the inlet flow converging zone.

50. The battery pack according to claim 42, wherein the plate body is configured with an outlet flow disturbing rib, the outlet flow disturbing rib is disposed on a bottom wall of the converging flow channel in the outlet flow converging zone, the outlet flow disturbing rib extends in the extension direction of the outlet flow converging zone, the outlet flow disturbing rib is spaced apart from a side wall of the converging flow channel where the outlet flow disturbing rib is located;
wherein at least one second notch is disposed on the outlet flow disturbing rib in the extension direction thereof.

51. The battery pack according to claim 50, wherein a plurality of outlet flow disturbing ribs are comprised, the plurality of outlet flow disturbing ribs are spaced apart in a width direction of the converging flow channel where the outlet flow disturbing ribs are located, and the second notches of adjacent outlet flow disturbing ribs are staggered in the extension direction of the converging flow channel where the outlet flow disturbing ribs are located.

52. The battery pack according to claim 36, wherein the plate body is further formed with at least one fixing zone, and the at least one fixing zone and the plurality of cooling zones are disposed alternately in the extension direction of the inlet flow converging zone.

53. An electric apparatus, comprising: an electric device and the battery pack according to any one of claims 1 to 52, the battery pack being electrically connected to the electric device to supply power to the electric device.
